# EUROPEAN PATENT APPLICATION

(11) **EP 4 672 746 A1**
(43) Date of publication of application: **31.12.2025**
(21) Application number: 24315306.1
(22) Date of filing: 25.06.2024
(51) Int. Cl.: H04N 19/119, H04N 19/176, H04N 19/70, H04N 19/96

(54) **METHOD AND APPARATUS FOR PARTITIONING OF ONE OR MORE BLOCKS OF A PICTURE**

(71) Applicant: Beijing Xiaomi Mobile Software Co., Ltd., Beijing Beijing 100085 (CN)
(72) Inventor: Tissier, Alexandre, Beijing, 100085 (CN); Abdoli, Mohsen, Beijing, 100085 (CN); Ghaznavi Youvalari, Ramin, Beijing, 100085 (CN)
(74) Representative: Zimmermann, Tankred Klaus

(57) **Abstract**

A method and an apparatus of processing one or more blocks of a picture is described. The method includes enabling one or more Multi-Type Tree, MTT splits for one or more of the blocks, which are MTT restricted blocks, and/or applying one or more restrictions to one or more of the sub-blocks, wherein the one or more sub-blocks are obtained by applying a MTT split to the one or more blocks.

## Description

### Technical Field

The present disclosure generally relates to the field of encoding/decoding pictures, images or videos, more specifically to a splitting or partitioning of one or more blocks of a picture. Embodiments of the present disclosure concern enabling a Multi-Type Tree, MTT, split to be applied to a MTT restricted block and/or applying restrictions on a block obtained by a MTT split.

### Background

The encoding and decoding of a picture, an image or a video is performed in accordance with a certain standard, for example, in accordance with the advanced video coding, AVC standard (see reference [1]), the high efficiency video coding, HEVC, standard (see reference [2]) or the versatile video coding, VVC, standard (see reference [3]).

For encoding and decoding of a picture, during prediction one or more blocks of a picture may be split or partitioned in to sub-blocks, which are used for the prediction.

Thus, there is a need to provide further improvements for splitting or partitioning of one or more blocks of a picture that may be applied for encoding and decoding of a picture, an image or a video.

### Summary

The present disclosure provides a method of processing one or more blocks of a picture, the method comprising:
enabling one or more Multi-Type Tree, MTT, splits for one or more of the blocks, which are MTT restricted blocks, and/or
applying one or more restrictions to one or more sub-blocks, wherein the one or more sub-blocks are obtained by applying a MTT split to the one or more blocks.

Optionally, the one or more blocks of the picture are processed according to a certain codec, wherein the certain codec provides a plurality of MTT splits, and wherein the all of the plurality of MTT splits or a proper subset of the plurality of MTT splits are enabled for the one or more MTT restricted blocks.

Optionally,
enabling the one or more MTT splits is signaled in a data stream, like a bitstream, including data representing the picture, e.g., at a Sequence Parameter Set, SPS, level or at a Picture Parameter Set, PPS, level, and
optionally, a first flag, e.g., a split_qt_flag, is explicitly signaled, and wherein the first flag indicates that the MTT partitioning mode is to be applied for one or more of the MTT restricted blocks, and a second flag, e.g., mtt_split_cu_vertical_flag, is signaled to indicate a splitting direction, and a third flag, e.g., mtt_split_cu_binary_flag, is signaled to indicate whether the split is a binary split or a ternary split.

Optionally,
the one or more restrictions applied to one or more of the sub-blocks comprise one or more of the following:
   - a leaf restriction on the sub-block,
   - a restriction on a number of consecutive MTT splits applicable to the sub-block,
   - a coding tool restriction on the sub-block, and
optionally, the one or more blocks comprise one or more MTT unrestricted blocks and/or one or more MTT restricted blocks, wherein the MTT split is applied to the one or more MTT unrestricted blocks and/or the one or more MTT restricted blocks for obtaining the one or more sub-blocks.

Optionally, the sub-block becomes a leaf node for which no further split is allowed, or wherein no split is applied to the sub-block.

Optionally,
the leaf restriction is signaled implicitly or explicitly, and
optionally, a partitioning signaling following a creation of the sub-block is done implicitly by setting a flag, e.g., a split_cu_flag, to a predefined value, like 0, wherein the flag indicates whether or not the sub-block is further partitioned, and wherein the predefined value indicates that the sub-block is not to be further partitioned.

Optionally,
the number of consecutive MTT splits applicable to the sub-block is restricted to a predefined or signaled number of consecutive MTT splits, e.g., to one consecutive MTT split, and wherein one or more consecutive sub-blocks are obtained by applying the consecutive MTT splits, and
optionally, a last one of the consecutive sub-blocks becomes a leaf node for which no further split is allowed, and wherein the last one of the consecutive sub-blocks is obtained from a last one of the consecutive MTT splits, or no split is applied to a last one of the consecutive sub-blocks, and wherein the last one of the consecutive sub-blocks is obtained from a last one of the consecutive MTT splits.

Optionally,
the leaf restriction of the last consecutive sub-block is signaled implicitly or explicitly, and
optionally, a partitioning signaling following a creation of the last consecutive sub-block is done implicitly by setting a flag, e.g., a split_cu_flag, to a predefined value, like 0, wherein the flag indicates whether or not the last consecutive sub-block is further partitioned, and wherein the predefined value indicates that the last consecutive sub-block is not to be further partitioned.

Optionally, wherein the one or more blocks of the picture are processed according to a certain codec wherein the certain codec provides one or more coding tools, and wherein predefined or signaled ones of the one or more coding tools are allowed or disallowed for use with the one or more sub-blocks.

Optionally,
a predefined or signaled number of consecutive MTT splits is applied to the sub-block, e.g., one consecutive MTT split, and wherein one or more consecutive sub-blocks are obtained by applying the consecutive MTT splits, and
predefined or signaled ones of the one or more coding tools are allowed or disallowed for use with the sub-block and with the one or more consecutive sub-blocks.

Optionally,
the coding tool restriction is signaled implicitly or explicitly, and
optionally, a disallowed coding tool signaled implicitly or all allowed and disallowed coding tools are signaled explicitly.

Optionally, the MTT restricted block has a size being larger than or equal to a predefined or signaled threshold.

The present disclosure provides a non-transitory computer-readable storage medium comprising instructions which, when executed by a computer, cause the computer to carry out the method of the present disclosure.

The present disclosure provides an apparatus of processing one or more blocks of a picture, the apparatus comprising:
a processing module,
wherein the one or more blocks comprise one or more Multi-Type Tree, MTT, restricted blocks, and wherein the processing module is configured to enable one or more MTT splits for one or more of the MTT restricted blocks, and/or
wherein one or more sub-blocks are obtained by applying a MTT split to the one or more blocks, and wherein the processing module is configured to apply one or more restrictions to one or more of the sub-blocks.

The present disclosure provides a data stream having encoded thereinto a picture, wherein the data stream comprises one of more of the following:
one or more flags indicating whether or not a MTT split is enabled for a MTT restricted block of one or more blocks of the picture, and/or
one or more flags indicating one or more restrictions for one or more sub-blocks, wherein the one or more sub-blocks are obtained by applying a MTT split to one or more blocks of the picture.

The technical solutions provided according to embodiments of the present disclosure have the following beneficial effects.

In prior art approaches, the multi-type tree structure is restricted based on certain conditions, which leads to an inefficient partition. For example, for blocks having specific sizes only the quad-tree is enabled but no MTT, i.e., MTT is not available for such blocks. Also, when allowed for a block, there are no restrictions on using MTT splits. This leads to a sub-optimal partition which, in turn, results in lower performance.

Embodiments of the present disclosure addresses the above drawbacks by providing approaches for processing one or more blocks of a picture which allow or enable one or more MTT splits for one or more of the MTT restricted blocks, and/or which apply one or more restrictions to one or more of sub-blocks obtained by applying a MTTG split to a block of the picture. This is advantageous because allowing MTT at specific part of the partitioning tree brings more flexibility which may separate objects or texture patterns more accurately.

It is to be understood that the content described in this section is not intended to identify key or critical features of the embodiment of the present disclosure, nor is it intended to limit the scope of the present disclosure. Other features of the present disclosure become readily apparent from the following description.

### Brief Description of the Drawings

The drawings are explanatory and serve to explain the present disclosure, and are not to be construed to limit the present disclosure to the illustrated embodiments.
- Fig. 1: is a block diagram of a conventional video encoder;
- Fig. 2: is a block diagram of a conventional video decoder;
- Fig. 3(a)-Fig. 3(E): illustrate five splitting modes including a quadtree mode and four multi-type tree modes;
- Fig. 4: illustrates an example of a CTU divided into multiple CUs using a quadtree and nested multi-type tree coding block structure;
- Fig. 5: illustrates a signaling mechanism of partition splitting information in a quadtree with nested multi-type tree coding tree structure;
- Fig. 6: illustrates a flow diagram of a first embodiment of a method of processing one or more blocks of a picture;
- Fig. 7: illustrates a flow diagram of a second embodiment of a method of processing one or more blocks of a picture;
- Fig. 8: illustrates a flow diagram of a third embodiment of a method of processing one or more blocks of a picture;
- Fig. 9: illustrates splits that are made available for MTT restricted blocks in accordance with embodiments of the first aspect of the present disclosure;
- Fig. 10: illustrates an embodiment enabling both a binary split (BT) and a ternary split (TT) at MTT restricted blocks;
- Fig. 11(A)-Fig. 11(B): illustrate embodiments enabling only binary splits (BTs) or only ternary splits (TTs) at MTT restricted blocks;
- Fig. 12: illustrates a partitioning process with leaf restriction for MTT restricted blocks in accordance with embodiments the second aspect of the present disclosure;
- Fig. 13: illustrates a partitioning process with leaf restriction for MTT unrestricted blocks in accordance with embodiments of the present disclosure;
- Fig. 14: illustrates a partitioning process which limits the MTT partitioning to a small number of consecutive splits for MTT restricted blocks in accordance with embodiments of the present disclosure;
- Fig. 15: illustrates a partitioning process which limits the MTT partitioning to a small number of consecutive splits for MTT unrestricted blocks in accordance with embodiments of the present disclosure;
- Fig. 16(A)-Fig. 16(B): illustrate applying a coding tool restriction on blocks obtained by splitting MTT restricted blocks in accordance with embodiments of the present disclosure;
- Fig. 17: illustrates applying a coding tool restriction on blocks obtained by splitting MTT unrestricted blocks in accordance with embodiments of the present disclosure;
- Fig. 18(A)-Fig. 18(B): illustrate applying a coding tool restriction on blocks obtained by splitting MTT restricted blocks in accordance with further embodiments of the present disclosure;
- Fig. 19: illustrates applying a coding tool restriction on blocks obtained by splitting MTT unrestricted blocks in accordance with further embodiments of the present disclosure;
- Fig. 20: illustrates a flow diagram representing a parsing process for partitioning in accordance with embodiments;
- Fig. 21: illustrates a flow diagram of a method for decoding an encoded data stream, the encoded data stream including data representing a picture, in accordance with a first embodiment;
- Fig. 22: illustrates a flow diagram of a method for decoding an encoded data stream, the encoded data stream including data representing a picture, in accordance with a second embodiment;
- Fig. 23: illustrates a flow diagram of a method for decoding an encoded data stream, the encoded data stream including data representing a picture, in accordance with a third embodiment;
- Fig. 24: illustrates a flow diagram of a method for encoding a picture into an encoded data stream, in accordance with a first embodiment;
- Fig. 25: illustrates a flow diagram of a method for encoding a picture into an encoded data stream, in accordance with a second embodiment;
- Fig. 26: illustrates a flow diagram of a method for encoding a picture into an encoded data stream, in accordance with a third embodiment;
- Fig. 27: illustrates a block diagram of an apparatus of predicting one or more blocks of a picture in accordance with a first embodiment of the present disclosure;
- Fig. 28: illustrates a block diagram of an apparatus of predicting one or more blocks of a picture in accordance with a second embodiment of the present disclosure;
- Fig. 29: illustrates a block diagram of an apparatus of predicting one or more blocks of a picture in accordance with a third embodiment of the present disclosure;
- Fig. 30: illustrates a block diagram of a decoder for decoding an encoded data stream in accordance with embodiments of the present disclosure;
- Fig. 31: illustrates a block diagram of an encoder for encoding a picture into an encoded data stream in accordance with embodiments of the present disclosure;
- Fig. 32: illustrates a data stream in accordance with embodiments of the present disclosure; and
- Fig. 33: illustrates a block diagram illustrating an electronic device according to embodiments of the present disclosure.

### Detailed Description

Illustrative embodiments of the present disclosure are described below with reference to the drawings, where various details of the embodiments of the present disclosure are included to facilitate understanding and are to be considered as illustrative only. Accordingly, those of ordinary skill in the art recognize that various changes and modifications of the embodiments described herein can be made without departing from the scope of the present disclosure. Also, descriptions of well-known functions and constructions are omitted from the following description for clarity and conciseness.

In the present disclosure, the term "and/or" is intended to cover all possible combinations and sub-combinations of the listed elements, including any one of the listed elements alone, any sub-combination, or all of the elements, and without necessarily excluding additional elements.

In the present disclosure, the phrase "at least one of...or..." is intended to cover any one or more of the listed elements, including any one of the listed elements alone, any sub-combination, or all of the elements, without necessarily excluding any additional elements, and without necessarily requiring all of the elements.

In the present disclosure, the term "coding" refers to "encoding" or to "decoding" as becomes apparent from the context of the described embodiments. Likewise, the term "coder" refers to "an encoder" or to "a decoder".

### Encoder

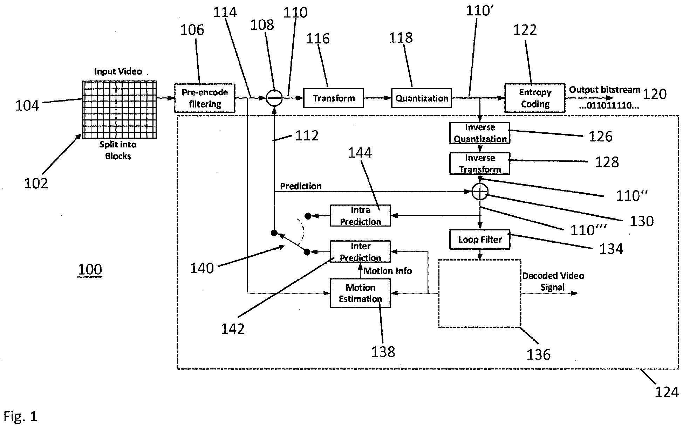

A block diagram of a standard video compression system 100 operating in accordance with the VVC standard is illustrated in Fig. 1. The standard video coder 100 compresses and encodes a picture 102 of a video sequence. The picture 102 to be encoded is partitioned into blocks 104 also referred to as coding units, CUs. The encoder 100 comprises a pre-encode filter 106 and a prediction residual signal former 108 which generates a prediction residual signal 110 so as to measure a deviation of a prediction signal 112 from the signal 114 output by the filter 106. The encoder further comprises a transformer 116, a quantizer 118 and provides an output bitstream or data stream 120 using an entropy coder 122. Further, the encoder 100 comprises a prediction stage 124 for determining the prediction signal 112, which includes a de-quantizer or inverse quantizer 126, an inverse transformer 128, a combiner 130, an in-loop filter 134, a picture buffer 136, a motion estimator 138, an intra/inter mode selector 140, an inter predictor 142 and an intra predictor 144.

The video coder 100 as described with reference to Fig. 1 compresses and encodes a picture 102 of a video sequence as follows. The picture 102 to be encoded is partitioned into the blocks or CUs 104. Each coding unit 104 is encoded using either an intra or inter coding mode. When a CU is encoded in the intra mode, intra prediction is performed by the intra predictor 144. The intra prediction comprises predicting the current CU 114 being encoded by means of already coded, decoded and reconstructed picture samples located around the current CU, e.g., on the top and on the left of the current CU. The intra prediction is performed in the spatial domain. In an inter mode, motion compensation and motion estimation are performed by the motion estimator 138 which searches, in one or more reference pictures provided by the picture buffer 136 and used to predictively code the current picture, a CU that is a good predictor of a current CU. For example, a good predictor of a current CU is a predictor which is similar to the current CU, i.e., the distortion between the two CUs is low or below a certain threshold. The motion estimation may also account for the rate cost of signaling the predictor to optimize a rate-distortion tradeoff. The output of the motion estimation step is one or more motion vectors and reference indices associated with the current CU. The motion compensation then predicts the current CU by means of the one or more motion vectors and reference pictures indices as determined by the motion estimator 138. Basically, the block or CU contained in the selected reference picture and pointed to by the determined motion vector is used as the prediction block for the current CU. The encoder 100, by means of the selector 140, selects one of the intra coding mode or the inter coding mode to use for encoding the CU and indicates the intra/inter decision, for example, by means of a prediction mode flag. Prediction residuals 110 are then transformed and quantized by blocks 116 and 118, and the quantized transform coefficients as well as the motion vectors and other syntax elements are entropy encoded and written into the output bitstream 120. The encoder 100 may skip the transform stage 116 and apply the quantization directly to the non-transformed residual signal 110 in a so-called transform-skip coding mode. After a block or CU has been encoded, the encoder decodes the CU and reconstructs it so as to obtain the reconstructed signal 110‴ that may serve as a reference data for predicting future CUs or blocks to encode. The quantized transform coefficients 110' are de-quantized and inverse transformed leading to a decoded prediction CU or block 110", and the decoded prediction residuals and the predicted block are then combined at 130, typically summed, so as to provide the reconstructed block or CU 110‴. The in-loop filters 134 are applied to the reconstructed picture to reduce compensation artifacts. For example, a deblocking filter, a sample adaptive offset, SAO, filter, and an adaptive loop filter, ALF, may be applied to reduce encoding artifacts. The filtered picture is stored in the buffer 136, also referred to as the decoded picture buffer, DPB, so that it may be used as a reference picture for coding subsequent pictures.

### Decoder

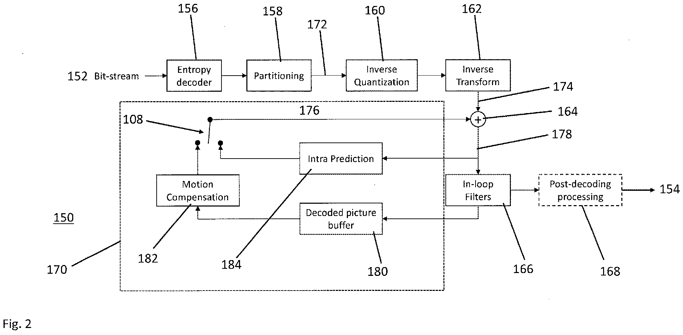

Fig. 2 is a block diagram of a video decoder 150 for predictively decoding from a data or bit stream 152 a picture or video which is provided at an output 154 of the decoder 150. The decoder 150 includes an entropy decoder 156, a partitioning block 158, an inverse quantizer 160, an inverse transformer 162, a combiner 164, an in-loop filter 166, optionally a post-decoding processor 168, and a prediction module 170. The prediction module 170 includes a decoded picture buffer 180 a motion compensator 182 an intra predictor 184.

An encoded picture of a video sequence is decompressed and decoded by the decoder 150 as follows. The input bit stream 152 is entropy decoded by the decoder 156 which provides, for example, the block partitioning information, the coding mode for each coding unit, the transform coefficients contained in each transform block, prediction information, like intra prediction mode, motion vectors, reference picture indices, and other coding information. The block partitioning information indicates how the picture is partitioned and the decoder 150 may divide the input picture into coding tree units (CTUs), typically of a size of 64x64 or 128x128 pixels and divide each CTU into rectangular or square coding units, CUs, according to the decoded partitioning information. The entropy decoded quantized coefficients 172 are de-quantized 160 and inverse transformed 162 so as to obtain the decoded residual picture or CU 174. The decoded prediction parameters are used to predict the current block or CU, i.e., whether the predicted block is to be obtained through its intra prediction or through its motion-compensated temporal prediction. The prediction process performed at the decoder side is the same as the one performed at the encoder side. The decoded residual blocks 174 are added to the predicted block 176, thereby yielding the reconstructed current image block 1768 The in-loop filters 166 are applied to the reconstructed picture or image which is also stored in the decoded picture buffer 180 to serve with the reference picture for future pictures to decode. As mentioned above, the decoded picture may further go through a post-decoding processing, for example for performing an inverse color transformation, for example a conversion from YCbCr 4:2:0 to RGB 4:4:4.

In all above processes, the entropy (de)coding of syntax elements representing encoder decisions such as block partitioning information, prediction modes/parameters, quantized transform coefficients, etc. may be carried out by using a context-adaptive entropy coder, such as Context-Adaptive Binary Arithmetic Coding (CABAC). To use CABAC, each syntax element is first binarized to be represented with a series of bins. Then each bin is associated with a CABAC context model that keeps track of binary values of that particular bin in the past, in order to more efficiently model its probability distribution.

### Partitioning process

When processing pictures, e.g., by the above-described encoder or by the above-described decoder, one or more pictures may be divided into a sequence of CTUs. For example, for a picture that has three sample arrays, a CTU may include of a N×N block of luma samples together with two corresponding blocks of chroma samples. The partitioning process is then applied on each CTU using pre-defined splits.

### Related splits in JVET

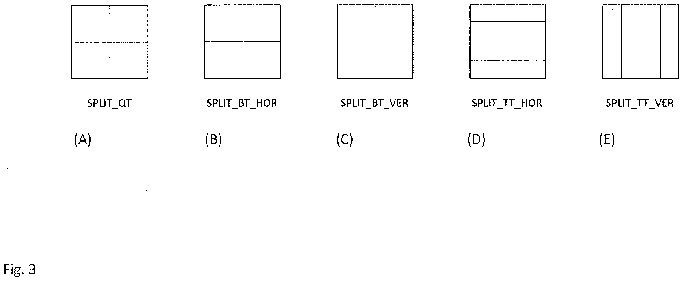

As introduced with the VVC standard, a quaternary-tree structure with nested multi-type tree, MTT, using binary and ternary splits segmentation structure replaces the concepts of multiple partition unit types. The quaternary-tree structure removes the separation of the Coding Unit (CU), the Prediction Unit (PU) and the Transform Unit (TU) concepts except as needed for CUs that have a size too large for a maximum transform length. The quaternary-tree structure supports more flexibility for the CU partition shapes. In the coding tree structure, a CU can have either a square or rectangular shape. The coding tree unit (CTU) is first partitioned by a quaternary tree (also referred to as a quadtree) structure. Then the quaternary tree leaf nodes can be further partitioned by a multi-type tree, MTT, structure. Fig. 3 illustrates five splitting modes including a quadtree (SPLIT_QT) mode as illustrated in Fig. 3(A) and four multi-type tree modes as illustrated in Fig. 3(B) to Fig. 3(E). The four splitting types in multi-type tree structure include a horizontal binary splitting (SPLIT_BT_HOR) as illustrated in Fig. 3(B), a vertical binary splitting (SPLIT_BT_VER) as illustrated in Fig. 3(C), a horizontal ternary splitting (SPLIT_TT_HOR) as illustrated in Fig. 3(D), and a vertical ternary splitting (SPLIT_TT_VER) as illustrated in Fig. 3(E). The multi-type tree leaf nodes are called coding units (CUs), and unless the CU is too large for the maximum transform length, this segmentation is used for prediction and transform processing without any further partitioning. This means that, in most cases, the CU, PU and TU have the same block size in the quadtree with nested multi-type tree coding block structure. The exception occurs for instance when a maximum supported transform length is smaller than the width or height of the color component of the CU.

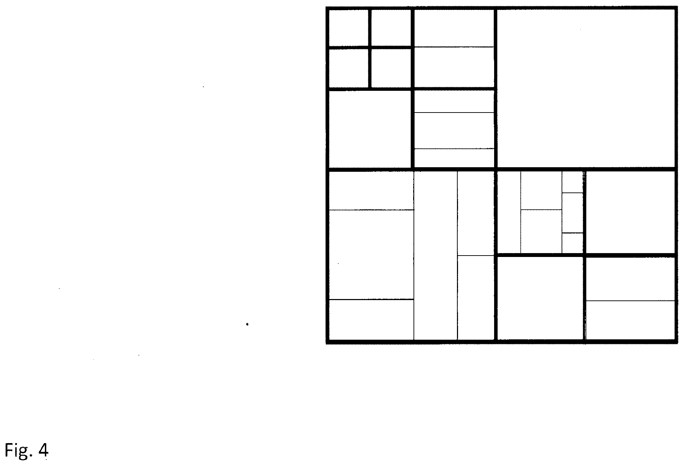

Fig. 4 illustrates an example of a CTU divided into multiple CUs with a quadtree and nested multi-type tree coding block structure. The bold block edges represent a quadtree partitioning and the remaining edges represent a multi-type tree partitioning. The quadtree with nested multi-type tree partition provides a content-adaptive coding tree structure comprised of CUs. The size of the CU may be as large as the CTU or as small as 4×4 in units of luma samples. For the case of a 4:2:0 chroma format, the maximum chroma coding block (CB) size is 64×64 and the minimum size chroma CB includes 16 chroma samples. In VVC, the maximum supported luma transform size is 64×64 and the maximum supported chroma transform size is 32×32. When the width or height of the CB is larger the maximum transform width or height, the CB is automatically split in the horizontal and/or vertical direction to meet the transform size restriction in that direction.

The following parameters are defined for the quadtree with nested multi-type tree coding tree scheme. These parameters are specified by SPS syntax elements and can be further refined by picture header syntax elements.

| | |
|---|---|
| - CTU size: | the root node size of a quaternary tree |
| - MinQTSize: | the minimum allowed quaternary tree leaf node size |
| - MaxBtSize: | the maximum allowed binary tree root node size |
| - MaxTtSize: | the maximum allowed ternary tree root node size |
| - MaxMttDepth: | the maximum allowed hierarchy depth of multi-type tree splitting from a quadtree leaf |
| - MinCbSize: | the minimum allowed coding block node size |

In one example of the quadtree with nested multi-type tree coding tree structure, the CTU size is set as 128×128 luma samples with two corresponding 64×64 blocks of 4:2:0 chroma samples, the MinQTSize is set as 16×16, the MaxBtSize is set as 32x32 and MaxTtSize is set as 32x32, the MinCbsize (for both width and height) is set as 4×4, and the MaxMttDepth is set as 3. The quaternary tree partitioning is applied to the CTU first to generate quaternary tree leaf nodes. The quaternary tree (QT) leaf nodes may have a size from 16×16 (i.e., the MinQTSize) to 64x64. If the leaf QT node is 64x64, it will not be further split by the binary tree since the size exceeds the MaxBtSize and MaxTtSize (i.e., 32x32). Otherwise, the leaf quadtree node may be further partitioned by the multi-type tree. Therefore, the quaternary tree leaf node is also the root node for the multi-type tree and it has a multi-type tree depth (mttDepth) as 0. When the multi-type tree depth reaches MaxMttDepth (i.e., 3), no further splitting is considered. When the multi-type tree node has a width equal to MinCbsize, no further horizontal splitting is considered. Similarly, when the multi-type tree node has a height equal to MinCbsize, no further vertical splitting is considered.

In VVC, the coding tree scheme supports the ability for the luma and chroma to have a separate block tree structure. For P and B slices, the luma and chroma CTBs in one CTU have to share the same coding tree structure. However, for I slices, the luma and chroma can have separate block tree structures. When separate block tree mode are applied, the luma CTB is partitioned into CUs by one coding tree structure, and the chroma CTBs are partitioned into chroma CUs by another coding tree structure. This means that a CU in an I slice may include a coding block of the luma component or coding blocks of two chroma components, and a CU in a P or B slice always includes coding blocks of all three color components unless the video is monochrome.

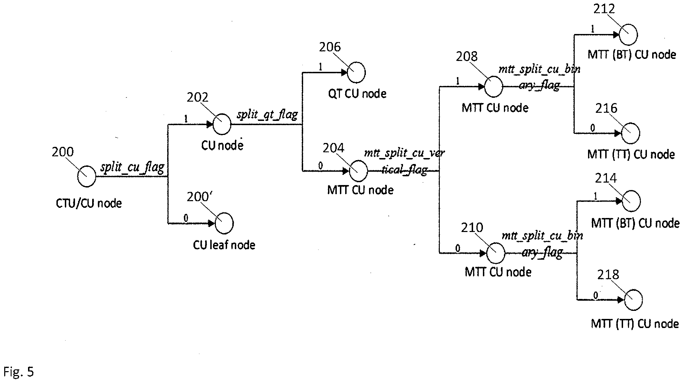

Fig. 5 illustrates the signaling mechanism of partition splitting information in a quadtree with nested multi-type tree coding tree structure. A coding tree unit (CTU) 200 is treated as the root of a quaternary tree and is first partitioned by a quaternary tree structure. Each quaternary tree leaf node 202 (being sufficiently large to allow it) is then further partitioned by a multi-type tree structure. In quadtree with nested multi-type tree coding tree structure, for each CU node 200, a first flag (split_cu_flag) is signaled to indicate whether the node 200 is further partitioned. If not, CU node 200 is a CU leaf node 200'. If the current CU node, like node 202, is a quadtree CU node, a second flag (split_qt_flag) is signaled to indicate whether it is a QT partitioning node 204 or a MTT partitioning node 206. When a node, like node 204, is partitioned with using the MTT partitioning mode, a third flag (mtt_split_cu_vertical_flag) is signaled to indicate the splitting direction, a vertical splitting resulting in node 208 (mtt_split_cu_vertical_flag = 1) and a horizontal splitting resulting in node 210 (mtt_split_cu_vertical_flag = 0). Then a fourth flag (mtt_split_cu_binary_flag) is signaled to indicate whether the split is a binary split or a ternary split, a binary splitting resulting in nodes 212 and 214, respectively, (mtt_split_cu_binary_flag = 1) and a ternary splitting resulting in nodes 216 and 218, respectively, (mtt_split_cu_binary_flag = 0).

Based on the values of mtt_split_cu_vertical_flag and mtt_split_cu_binary_flag, the multi-type tree splitting mode (MttSplitMode) of a CU is derived as shown in Table 1.

**Table 1: MttSplitMode derivation based on multi-type tree syntax elements**

| MttSplitMode | mtt_split_cu_vertical_flag | mtt_split_cu_binary_flag |
|---|---|---|
| SPLIT_TT_HOR | 0 | 0 |
| SPLIT_BT_HOR | 0 | 1 |
| SPLIT_TT_VER | 1 | 0 |
| SPLIT_BT_VER | 1 | 1 |

Under specific conditions some flags are not sent. For instance, when MTT is not available on a large block size only the split_cu_flag is sent as the split selection is unnecessary. The split_qt_flag may be implicitly defined as 1 for indicating that MTT is not available.

As described above, the multi-type tree structure is restricted based on the conditions described above. This leads to an inefficient partition. For blocks having specific sizes only the quad-tree is enabled but no MTT, i.e., MTT is not available for such blocks. This MTT restriction leads to a sub-optimal partition which, in turn, results in lower performance. While applying MTT unrestricted to any block qualifying for the MTT splits may lead to a better BDBR, this comes with high complexity cost.

Embodiments of the present disclosure addresses the above drawbacks by providing approaches for processing one or more blocks of a picture which allow or enable one or more MTT splits for one or more of the MTT restricted blocks, and/or which apply one or more restrictions to one or more of sub-blocks obtained by applying a MTTG split to a block of the picture. Embodiments allow or enable binary and ternary splits, which may be both horizontal and vertical, to be used on MTT restricted blocks, with certain normative constraints for an optimal complexity-vs-performance trade-off. One example of constraint is that the MTT splits are allowed only as a leaf or a small number of consecutive splits. Another example is that the MTT splits use only a subset of coding tools. Embodiments allow for applying such restrictions also to MTT unrestricted blocks. Stated differently, a first aspect of the present disclosure enables one or more new split modes for MTT restricted blocks that are currently disallowed normatively, and a second aspect of the present disclosure applies one or more constraints to the split process and the blocks resulting from those splits. It is noted that, in accordance with embodiments, the first and second aspects may be applied or used separated, i.e., when processing a block of a pictures, only the first aspect or only the second aspect may be used. In accordance with other embodiments, the first and second aspects may both be applied or used, i.e., when processing a block of a pictures, the first aspect and the second aspect may be used

The inventive approach is based on the following findings. The quadtree may be more efficient than MTT for a deep partition as it divides a block into four sub-blocks of size NxN, whereas MTT, e.g., a binary splitting (BT), divides a block into two sub-blocks either of size 2NxN or Nx2N. However, it has been found that, when being close to the leaves of the partitioning tree, using only quadtree is less representative than MTT. Allowing MTT at those specific part of the partitioning tree is advantageous as it brings more flexibility which may separate objects or texture patterns more accurately. Further, applying restrictions on MTT restricted and/or unrestricted blocks is advantageous because it allows reducing the above-mentioned high complexity cost while still providing for a good compression efficiency. Stated differently, the inventive approach provides for a better tradeoff between complexity and the compression efficiency.

In this disclosure, a block which, conventionally or in accordance with existing codecs or specifications, does not allow for MTT splits, e.g., the just-mentioned blocks having specific sizes, is referred to as a MTT restricted block, e.g., blocks which in accordance with an existing codec does not allow MTT splits. For instance, currently in the ECM codec, for all intra configurations, blocks larger than or equal to 64x64 are MTT restricted blocks. On the other hand, a block which allows for a MTT split, is referred to as MTT unrestricted blocks, e.g., blocks which in accordance with an existing codec allow MTT splits, like blocks smaller than to 64x64 in the ECM codec.

Further, the term sub-blocks or sub-CUs is referred to as multiple blocks created by a division of a block through any existing splits. For instance, based on a block of size 2Nx2N a quadtree split will create four sub-blocks defined as sub-CUs of size NxN.

In the description of the embodiments, reference is made to ECM. The present disclosure is not limited to ECM. Rather, in accordance with other embodiments, the inventive concept described herein is applicable to any other codec where the activation of MTT is limited, e.g., to blocks larger or smaller than a certain threshold, or where the activation of MTT is done without any restrictions. For example upper and lower bounds of thresholds for deciding whether MTT is applied or nor may be defined in the specification of the codec, or they may be signaled in the bitstream for example in Sequence Parameter Set (SPS) or Picture Parameter Set (PPS) levels.

Embodiments provide various approaches for splitting or partitioning one or more blocks of a picture that may be applied for encoding and decoding of a picture, an image or a video.

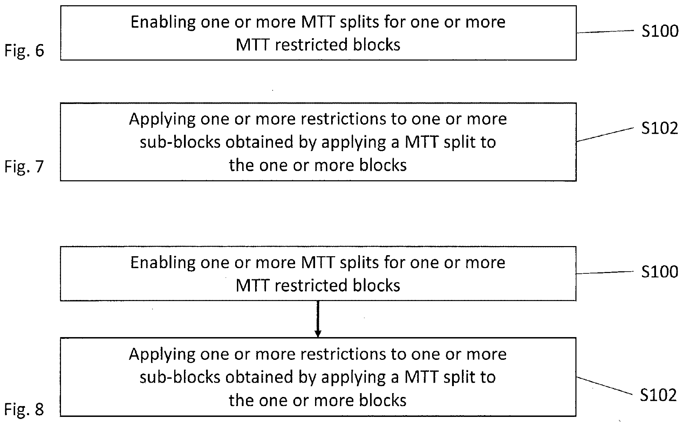

Fig. 6 illustrates a flow diagram of a first embodiment of a method of processing one or more blocks of a picture. The one or more blocks include one or more Multi-Type Tree, MTT, restricted blocks, and the method includes the following:
S100: Enabling one or more MTT splits for one or more of the MTT restricted blocks.

Fig. 7 illustrates a flow diagram of a second embodiment of a method of processing one or more blocks of a picture. The one or more sub-blocks are obtained by applying a MTT split to the one or more blocks, and the method includes the following:
S102: Applying one or more restrictions to one or more of the sub-blocks obtained by applying a MTT split to the one or more blocks.

Fig. 8 illustrates a flow diagram of a third embodiment of a method of processing one or more blocks of a picture. The method includes the following:
one or more blocks of a picture.
S100: Enabling one or more MTT splits for one or more of the MTT restricted blocks.
S102: Applying one or more restrictions to one or more of the sub-blocks obtained by applying a MTT split to the one or more blocks.

In accordance with an embodiment of this disclosure, the MTT splits, which include of binary splits (BTs) and ternary splits (TTs) are authorized or allowed on MTT restricted blocks. In other words, using BTs and TTs for MTT restricted blocks is normatively allowed. The BTs and TSs may be both horizontal and vertical.

In such an embodiment, a split_qt_flag, a mtt_split_cu_vertical_flag and a mtt_split_cu_binary_flag may be explicitly signaled for MTT restricted blocks, e.g., in a data stream, like a bitstream, including data representing the picture, e.g., at a Sequence Parameter Set, SPS, level or at a Picture Parameter Set, PPS, level.

In accordance with an embodiment of this disclosure, sub-blocks or sub-CUs, which are generated by one MTT split at a MTT restricted block, are defined to be leaves of the partitioning tree. In other words, no more split is allowed for those sub-CUs.

When the sub-CUs are generated by MTT at a MTT restricted block, each split_cu_flag may be determined implicitly to be 0 for the sub-CUs.

When the sub-CUs are generated by MTT at a MTT restricted block, each split_cu_flag may be determined explicitly for the sub-CUs.

In accordance with an embodiment of this disclosure, sub-blocks or sub-CUs, which are generated by one MTT split at a block, where MTT was not restricted (MTT unrestricted block), are defined to be leaves of the partitioning tree. In other words, no more split is allowed for those sub-CUs.

When the sub-CUs are generated by MTT at a MTT unrestricted block, each split_cu_flag may be determined implicitly to be 0 for the sub-CUs.

When the sub-CUs are generated by MTT at a MTT unrestricted block, each split_cu_flag may be determined explicitly for the sub-CUs.

In accordance with an embodiment of this disclosure, a restricted number of consecutive MTT splits at MTT restricted block is allowed. The sub-blocks or sub-CUs, which are generated by the last possible split of those consecutive MTT splits, are defined to be leaves of the partitioning tree. In other words, no more split is allowed for those sub-CUs.

A no_split_flag may be determined implicitly to be 1 for those leaves of the partitioning tree resulting from the MTT split.

A no_split_flag may be determined explicitly for those leaves of the partitioning tree resulting from the MTT split.

In accordance with an embodiment of this disclosure, a restricted number of consecutive MTT splits at block, where MTT was not restricted (MTT unrestricted block), is allowed. The sub-blocks or sub-CUs generated by the last possible split of those consecutive MTT splits are defined to be leaves of the partitioning tree. In other words, no more split is allowed for those sub-CUs.

A no_split_flag may be determined implicitly to be 1 for those leaves of the partitioning tree resulting from MTT split.

A no_split_flag may be determined explicitly for those leaves of the partitioning tree resulting from MTT split.

In accordance with an embodiment of this disclosure, only a set or a proper subset of coding tools are processed for blocks resulting from the MTT splits at a MTT restricted block with leaf restriction.

The coding tools, which are not processed for the block resulting from a MTT split on MTT restricted blocks, may be signaled implicitly as 0.

The coding tools, which are not processed for the block resulting from a MTT split on MTT restricted blocks with leaf restriction, may be signaled explicitly.

In accordance with an embodiment of this disclosure, only a set or proper subset of coding tools are processed for blocks resulting from the MTT splits at block with leaf restriction, where MTT was not restricted (MTT unrestricted block).

The coding tools, which are not processed for the block resulting from a MTT split on the block with leaf restriction, where MTT was not restricted (MTT unrestricted block), may be signaled implicitly as 0.

The coding tools, which are not processed for the block resulting from a MTT split on the block with leaf restriction, where MTT was not restricted (MTT unrestricted block), may be signaled explicitly.

In accordance with an embodiment of this disclosure, only a set or a proper subset of coding tools are processed for blocks resulting from MTT splits with a small number of consecutive splits at a MTT restricted block.

The coding tools, which are not processed on a block resulting from one MTT split, may be signaled implicitly as 0.

The coding tools, which are not processed on a block resulting from one MTT split, may be signaled explicitly.

The coding tools, which are not processed on a block resulting from two MTT split, may be signaled implicitly as 0.

The coding tools, which are not processed on a block resulting from two MTT split, may be signaled explicitly.

The coding tools, which are not processed on a block resulting from one and two MTT splits, may be signaled implicitly as 0.

The coding tools, which are not processed on a block resulting from one and two MTT splits, may be signaled explicitly.

In accordance with an embodiment of this disclosure, only a set or proper subset of coding tools are processed for blocks resulting from the MTT splits with a small number of consecutive splits at a block, where MTT was not restricted (MTT unrestricted block).

The coding tools, which are not processed on a block resulting from one MTT split, may be signaled implicitly as 0.

The coding tools, which are not processed on a block resulting from one MTT split, may be signaled explicitly.

The coding tools, which are not processed on a block resulting from two MTT split, may be signaled implicitly as 0.

The coding tools, which are not processed on a block resulting from two MTT split, may be signaled explicitly.

The coding tools, which are not processed on a block resulting from one and two MTT splits, may be signaled implicitly as 0.

The coding tools, which are not processed on a block resulting from one and two MTT splits, may be signaled explicitly.

Embodiments of the 1^{st} and 2^{nd} Aspects are now described.

### 1^{st} Aspect - Enabling MTT splits at MTT restricted blocks

A first aspect of this disclosure enables new MTT splits at MTT restricted blocks. Depending on the settings, the new splits may be all or a proper subset of existing MTT splits provided, e.g., by the ECM.

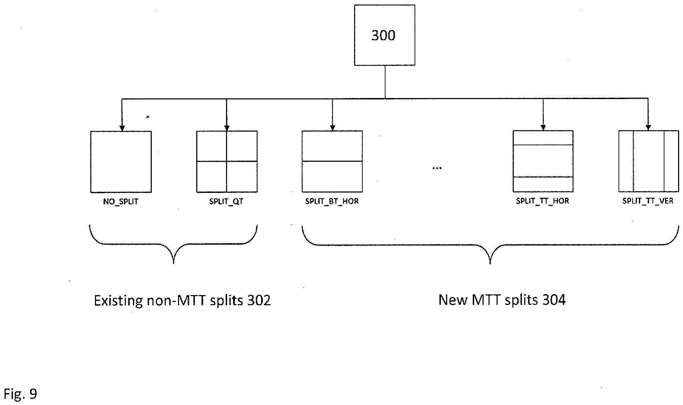

Fig. 9 illustrates splits that are made available for MTT restricted blocks 300 in accordance with embodiments of the first aspect of the present disclosure. Fig. 9 illustrates the existing non-MTT splits 302 of an existing encoding process that may choose between no split and quadtree (SPLIT_QT). Fig. 9 further illustrates the new MTT splits 304 all or some of which may be selected at the MTT restricted blocks 300 in accordance with embodiments of the present disclosure, e.g., a horizontal binary split (SPLIT_BT_HOR), a vertical binary split (SPLIT_BT_VER), a horizontal ternary split (SPLIT_TT_HOR) and a vertical ternary split (SPLIT_TT_VER).

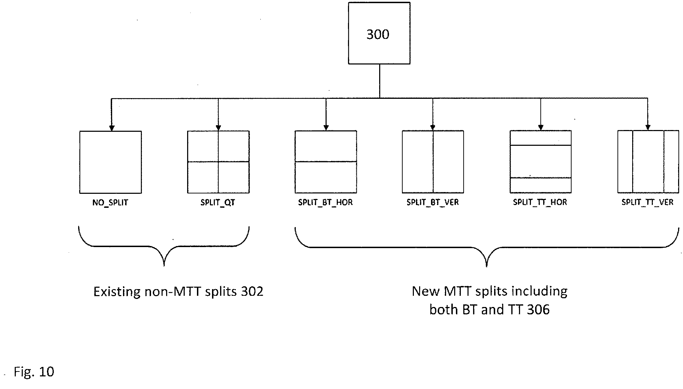

Fig. 10 illustrates an embodiment enabling both a binary split (BT) and a ternary split (TT) at MTT restricted blocks 300. Both BT and TT are enabled for the MTT restricted blocks 300. As is illustrated, in addition to the existing non-MTT splits 302, the following new MTT splits 306 are enabled: the horizontal binary split (SPLIT_BT_HOR), the vertical binary split (SPLIT_BT_VER), the horizontal ternary split (SPLIT_TT_HOR) and the vertical ternary split (SPLIT_TT_VER). In other words, all existing splits are now allowed also for MTT restricted blocks 300.

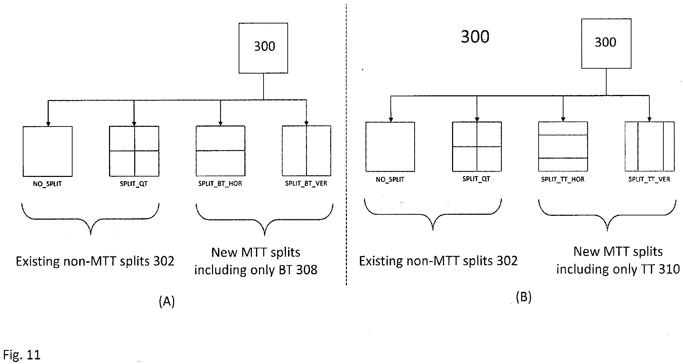

In accordance with embodiments, only a proper subset of the MTT splits provided by, e.g., ECM may be enabled. For example, other embodiments may allow only BT or only TT at MTT restricted blocks. Fig. 11(A) and Fig. 11(B) illustrate embodiments enabling only BT or only TT at MTT restricted blocks 300. Fig. 11(A) illustrates an embodiment enabling only a BT at MTT restricted blocks 300. As is illustrated, in addition to the existing non-MTT splits 302, only the new MTT splits 308 providing for a binary split are enabled, namely the horizontal binary split (SPLIT_BT_HOR) and the vertical binary split (SPLIT_BT_VER). Fig. 11(B) illustrates an embodiment enabling only TT at MTT restricted blocks 300. As is illustrated, in addition to the existing non-MTT splits 302, only the new MTT splits 310 providing for a ternary split are enabled, namely the horizontal ternary split (SPLIT_TT_HOR) and the vertical ternary split (SPLIT_TT_VER).

### 2^{nd} Aspect - Restricting MTT

A second aspect of this disclosure applies restrictions to MTT on all type of blocks that are possible CUs which may be either MTT restricted blocks or MTT unrestricted blocks, or blocks resulting from splits according to the first aspect, or any other blocks that may be a CU. Embodiments provide one or more of the following three restrictions:
(1) A leaf restriction on MTT splits.
(2) A restriction on a number of consecutive MTT splits.
(3) A coding tool restriction on blocks resulting from MTT splits.

In accordance with embodiments, the restrictions may be defined in the specification of an underlying codec. In accordance with other embodiments, the restrictions may be signaled in a data stream, like a bitstream, including data representing the picture, e.g., at a Sequence Parameter Set, SPS, level or at a Picture Parameter Set, PPS, level. For example a number of allowed splits after the MTT splits may be pre-defined or may be indicated in the bitstream.

### Leaf restriction on MTT splits

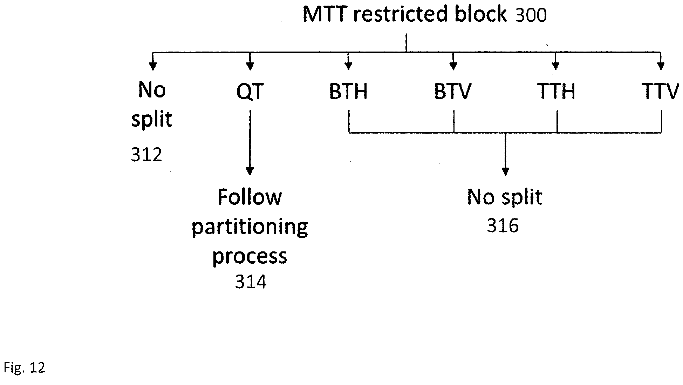

Fig. 12 illustrates a partitioning process with leaf restriction for MTT restricted blocks in accordance with embodiments of the present disclosure. In Fig. 12, the MTT splits at MTT restricted block 300 are shown only schematically as BTH (horizontal binary split), BTV (vertical binary split), TTH (horizontal ternary split) and TTV (vertical ternary split). Fig. 12 further illustrates the existing partitioning process with no split 312 and quadtree which is followed by the encoding process 314. Fig. 12 also illustrates a splitting of the MTT restricted block 300 according to the first aspect of the present disclosure into BTH, BTV, TTH and TTV. In accordance with embodiments of the second aspect of present disclosure if one of the MTT splits is selected for the MTT restricted block 300, the CUs defined by those splits are mandatory to be leaves, i.e. if BTH, BTV, TTH or TTV is selected at a MTT restricted block 300 during the partitioning process, no further splits 316 are allowed on such partitions.

The leaf restriction is not limited to MTT restricted blocks. In accordance with further embodiments of the present disclosure a partitioning process with leaf restriction may also be provided for MTT unrestricted blocks

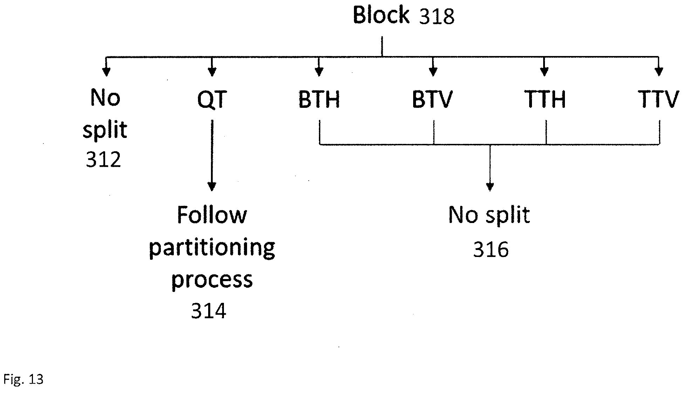

Fig. 13 illustrates a partitioning process with leaf restriction for MTT unrestricted blocks in accordance with embodiments of the present disclosure. In other words, the leaf restriction, which has described above may also be applied on blocks where MTT was already not restricted. In Fig. 13, the MTT splits at MTT unrestricted block 318 are shown only schematically as BTH (horizontal binary split), BTV (vertical binary split), TTH (horizontal ternary split) and TTV (vertical ternary split). Fig. 13 further illustrates the existing partitioning process with no split 312 and quadtree which is followed by the encoding process 314. Fig. 13 also illustrates a splitting of the MTT unrestricted block 318 into BTH, BTV, TTH and TTV. In accordance with embodiments of the second aspect of present disclosure if one of the MTT splits is selected for the MTT unrestricted block 318, the CUs defined by those splits are mandatory to be leaves, i.e. if BTH, BTV, TTH or TTV is selected at a MTT unrestricted block 318 during the partitioning process, no further splits 316 are allowed on such partitions. Thus, the same restriction as above with reference to Fig. 12 are applied on any blocks (sub-blocks or sub-CUs) resulting from MTT splits on any block 318, i.e., no split is applied on sub-blocks created by MTT splits.

### Restriction on the number of consecutive MTT splits

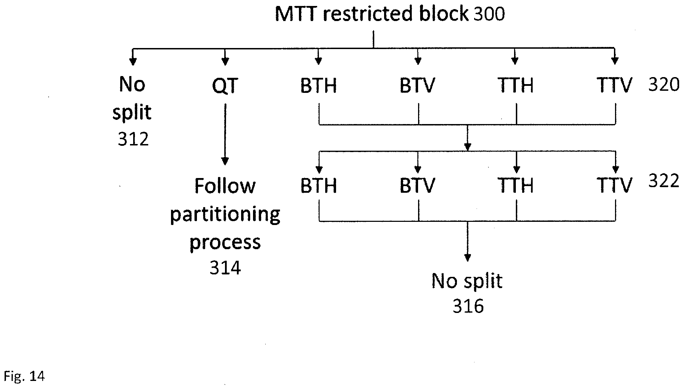

Fig. 14 illustrates a partitioning process which limits the MTT partitioning to a small number of consecutive splits for MTT restricted blocks in accordance with embodiments of the present disclosure. In Fig. 14, the MTT splits at MTT restricted block 300 are shown only schematically as BTH (horizontal binary split), BTV (vertical binary split), TTH (horizontal ternary split) and TTV (vertical ternary split). Fig. 14 further illustrates the existing partitioning process with no split 312 and quadtree which is followed by the encoding process 314. Fig. 14 also illustrates a splitting 320 of the MTT restricted block 300 according to the first aspect of the present disclosure into BTH, BTV, TTH and TTV, followed by a further splitting 322 of the split sub-blocks into BTH, BTV, TTH and TTV. In accordance with embodiments of the second aspect of present disclosure, a restriction is applied on top of the MTT split 320 on the MTT restricted block 300 in accordance with the first aspect. If the splits 320 are selected, the further sub-bocks or CUs defined by the splits 320 can only be split once with the MTT splits 322, i.e., if BTH, BTV, TTH or TTV is selected at the MTT restricted block 300 during the partitioning process only one more split 322 is allowed. After that last split 322, the CUs defined are considered to be leaves.

The restriction on the number of consecutive MTT splits is not limited to MTT restricted blocks. In accordance with further embodiments of the present disclosure a partitioning process with a restriction on the number of consecutive MTT splits may also be provided for MTT unrestricted blocks.

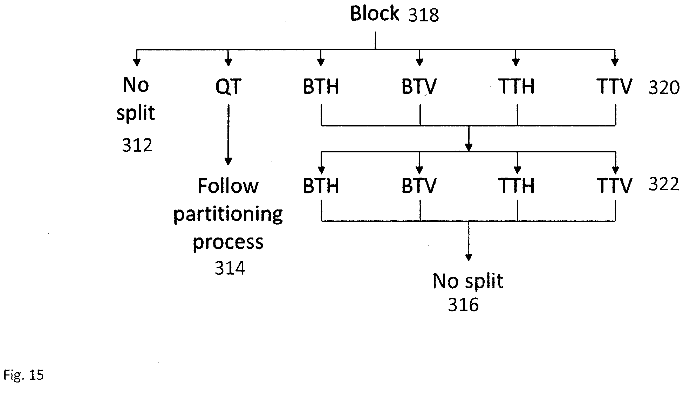

Fig. 15 illustrates a partitioning process with a restriction on the number of consecutive MTT splits for MTT unrestricted blocks in accordance with embodiments of the present disclosure. In other words, the restriction on the number of consecutive MTT splits, which has described above, may also be applied on blocks where MTT was already not restricted. In Fig. 15, the MTT splits at MTT unrestricted block 318 are shown only schematically as BTH (horizontal binary split), BTV (vertical binary split), TTH (horizontal ternary split) and TTV (vertical ternary split). Fig. 15 further illustrates the existing partitioning process with no split 312 and quadtree which is followed by the encoding process 314. Fig. 15 also illustrates a splitting 320 of the MTT unrestricted block 318, followed by a further splitting 322 of the split sub-blocks into BTH, BTV, TTH and TTV. In accordance with embodiments of the second aspect of present disclosure, a restriction is applied on top of the MTT split 320 on the MTT unrestricted block 318. If the splits 320 are selected, the further sub-bocks or CUs defined by the splits 320 can only be split once with the MTT splits 322, i.e., if BTH, BTV, TTH or TTV is selected at the MTT unrestricted block 318 during the partitioning process only one more split 322 is allowed. After that last split 322, the CUs defined are considered to be leaves. Thus, the same restriction as above with reference to Fig. 14 are applied on any blocks (sub-blocks or sub-CUs) resulting from MTT splits on any block 318, i.e., the same restriction described above is applied on those blocks resulting from two consecutive MTT splits 320, 322, i.e., no split is applied on sub-blocks created by the second consecutive MTT split 322.

### Coding tool restriction on block resulting from MTT split

In accordance with embodiments of the present disclosure, blocks (sub-blocks, sub-CUs) resulting from a MTT split, e.g., sub-blocks with a leaf restriction for MTT restricted blocks may be constrained in terms of coding tools that are allowed.

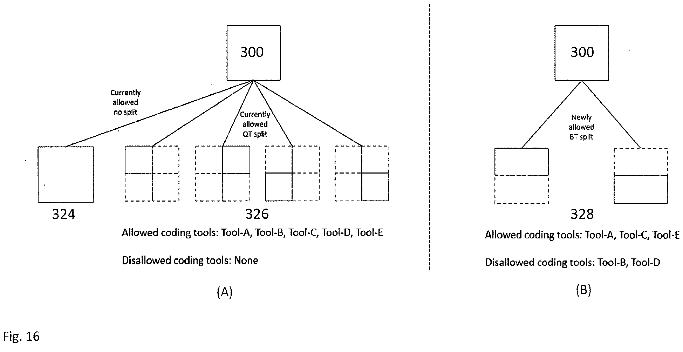

Fig. 16(A) and Fig. 16(B) illustrate applying a coding tool restriction on blocks obtained by splitting MTT restricted blocks 300 in accordance with embodiments of the present disclosure. It is assumed that a codec used for processing the picture, e.g., ECM, includes a set of five coding tools, namely coding tools A, B, C, D and E. As is illustrated in Fig.16(A) all coding tools A-E are allowed for blocks 324 resulting from no split or for blocks 326 resulting from a QT split (currently allowed) at MTT restricted blocks 300. However, as is illustrated in Fig.16(B), two of these coding tools, e.g., B and D, are normatively disallowed for blocks 328 resulting from a new MTT split with a leaf restriction for MTT restricted blocks 300. In the depicted embodiment, only BTH is displayed, however, the described coding tool restriction may be applied to any of the MTT splits BTH, BTV, TTH or TTV independently or to all of the MTT splits BTH, BTV, TTH or TTV together.

The coding tool restriction of Fig. 16(A) and Fig.16(B) is not limited to MTT restricted blocks. In accordance with further embodiments of the present disclosure a partitioning process with a coding tool restriction may also be provided for MTT unrestricted blocks.

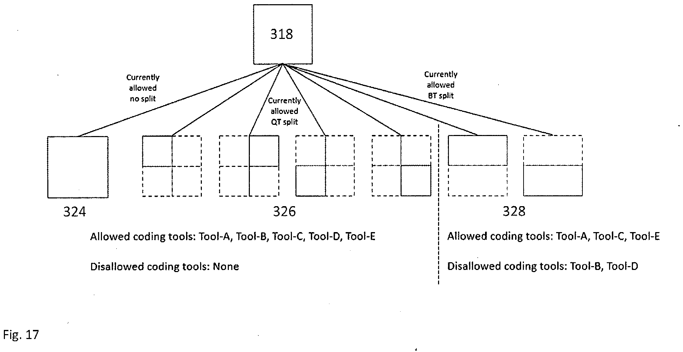

Fig. 17 illustrates applying a coding tool restriction on blocks obtained by splitting MTT unrestricted blocks 318 in accordance with embodiments of the present disclosure. Again, it is assumed that a codec used for processing the picture, e.g., ECM, includes a set of five coding tools, namely coding tools A, B, C, D and E. All coding tools A-E are allowed for blocks 324 resulting from no split or for blocks 326 resulting from a QT split (currently allowed) at MTT restricted blocks 300. However, two of these coding tools, e.g., B and D, are normatively disallowed for blocks 328 resulting from a BT split or BTH (currently allowed). In the depicted embodiment, only BTH is displayed, however, the described coding tool restriction may be applied to any of the currently allowed MTT splits BTH, BTV, TTH or TTV independently or to all of the currently allowed MTT splits BTH, BTV, TTH or TTV together. Thus, Fig. 17 presents the same restriction, as described above with reference to Fig. 16, on blocks 318 where MTT was already not restricted. For example, some coding tools may be constrained also on blocks where MTT was already not restricted when a leaf restriction is applied after one MTT split.

In accordance with further embodiments of the present disclosure, blocks (sub-blocks, sub-CUs) resulting from a MTT split, e.g., sub-blocks with a restricted number of consecutive splits for MTT restricted blocks may be constrained in terms of coding tools that are allowed. For example, blocks resulting from a MTT split with a small number of consecutive splits for MTT restricted blocks may be constrained in terms of coding tools that are allowed.

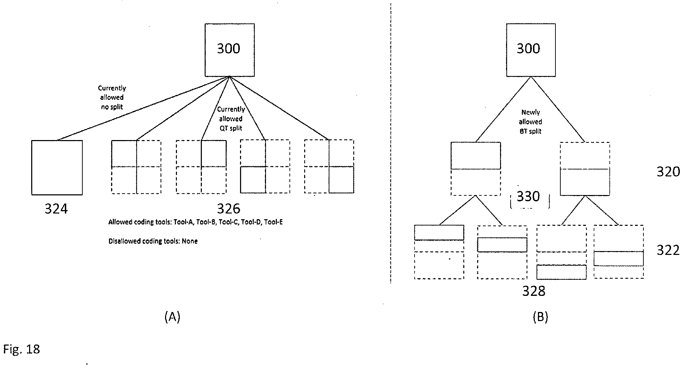

Fig. 18(A) and Fig. 18(B) illustrate applying a coding tool restriction on blocks obtained by splitting MTT restricted blocks 300 in accordance with embodiments of the present disclosure. It is assumed that a codec used for processing the picture, e.g., ECM, includes a set of five coding tools, namely coding tools A, B, C, D and E. As is illustrated in Fig.18(A) all coding tools A-E are allowed for blocks 324 resulting from no split or for blocks 326 resulting from a QT split (currently allowed) at MTT restricted blocks 300. However, as is illustrated in Fig.16(B), for blocks 328 resulting from MTT splits 320, 322 with a root 330 to a MTT restricted block 300 one of a plurality of different restrictions may be applied.

In accordance with embodiments, a first configuration allows all the existing coding tools for the blocks 330 resulting from the first MTT split 320, and for the blocks 328 resulting from two consecutive MTT splits 320, 322 only a portion of the existing tools are allowed. For example, for blocks 328 resulting from two consecutive MTT splits 320, 322 the coding tools B and D are normatively disallowed. The first configuration may be as follows:
Config 1:

| | |
|---|---|
| Allowed coding tools for blocks 330: | Tool-A, Tool-B, Tool-C, Tool-D, Tool-E |
| Disallowed coding tools for blocks 330: | None |
| Allowed coding tools for blocks 328: | Tool-A, Tool-C, Tool-E |
| Disallowed coding tools for blocks 328: | Tool-B, Tool-D |

In accordance with embodiments, a second configuration allows only a portion of the existing tools, e.g., B and D, for the blocks 330 resulting from the first MTT split 320. For the blocks 328 resulting from two consecutive MTT splits 320, 322 all the existing coding tools are allowed. The second configuration may be as follows:
Config 2:

| | |
|---|---|
| Allowed coding tools for blocks 330: | Tool-A, Tool-C, Tool- |
| Disallowed coding tools for blocks 330: | Tool-B, Tool-D |
| Allowed coding tools for blocks 328: | Tool-A, Tool-B, Tool-C, Tool-D, Tool-E |
| Disallowed coding tools for blocks 328: | None |

In accordance with embodiments, a third configuration restricts a portion of the existing coding tools for both blocks 330 resulting from one MTT split 320 for MTT restricted blocks 300 and blocks 328 resulting from two MTT splits 320, 322 for MTT restricted blocks 330. The coding tools restricted may be different between the blocks 330, resulting from one MTT split 320 for MTT restricted blocks 300 and blocks 328 resulting from two MTT splits 320, 322 for MTT restricted blocks 300. The third configuration may be as follows:
Config 3:

| | |
|---|---|
| Allowed coding tools for blocks 330: | Tool-A, Tool-C, Tool- |
| Disallowed coding tools for blocks 330: | Tool-B, Tool-D |
| Allowed coding tools for blocks 328: | Tool-A, Tool-C, Tool-E |
| Disallowed coding tools for blocks 328: | Tool-B, Tool-D |

It is noted that the mentioned coding tools that are disallowed, like B and D above, may can change depending on the configuration or depending on the number of consecutive MTT splits.

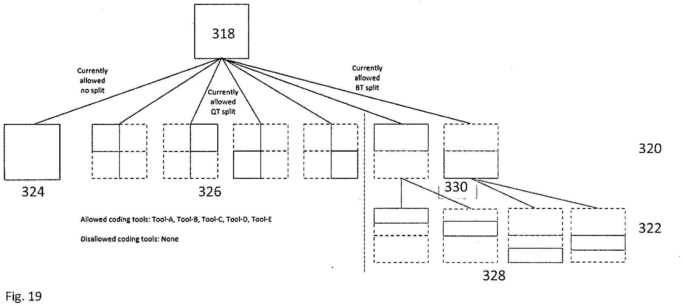

Fig. 19 illustrates applying a coding tool restriction on blocks obtained by splitting MTT unrestricted blocks 318 in accordance with embodiments of the present disclosure. Again, it is assumed that a codec used for processing the picture, e.g., ECM, includes a set of five coding tools, namely coding tools A, B, C, D and E. All coding tools A-E are allowed for blocks 324 resulting from no split or for blocks 326 resulting from a QT split (currently allowed) at MTT unrestricted blocks 318. However, for blocks 328 resulting from currently allowed MTT splits 320, 322 with a root 330 to a MTT unrestricted block 318 one of a plurality of different restrictions may be applied.

In accordance with embodiments, a first configuration allows all the existing coding tools for the blocks 330 resulting from the first MTT split 320, and for the blocks 328 resulting from two consecutive MTT splits 320, 322 only a portion of the existing tools are allowed. For example, for blocks 328 resulting from two consecutive MTT splits 320, 322 the coding tools B and D are normatively disallowed. The first configuration may be as follows:
Config 1:

| | |
|---|---|
| Allowed coding tools for blocks 330: | Tool-A, Tool-B, Tool-C, Tool-D, Tool-E |
| Disallowed coding tools for blocks 330: | None |
| Allowed coding tools for blocks 328: | Tool-A, Tool-C, Tool-E |
| Disallowed coding tools for blocks 328: | Tool-B, Tool-D |

In accordance with embodiments, a second configuration allows only a portion of the existing tools, e.g., B and D, for the blocks 330 resulting from the first MTT split 320. For the blocks 328 resulting from two consecutive MTT splits 320, 322 all the existing coding tools are allowed. The second configuration may be as follows:
Config 2:

| | |
|---|---|
| Allowed coding tools for blocks 330: | Tool-A, Tool-C, Tool- |
| Disallowed coding tools for blocks 330: | Tool-B, Tool-D |
| Allowed coding tools for blocks 328: | Tool-A, Tool-B, Tool-C, Tool-D, Tool-E |
| Disallowed coding tools for blocks 328: | None |

In accordance with embodiments, a third configuration restricts a portion of the existing coding tools for both blocks 330 resulting from one MTT split 320 for MTT restricted blocks 330 and blocks 328 resulting from two MTT splits 320, 322 for MTT restricted blocks 330. The coding tools restricted may be different between the blocks 330, resulting from one MTT split 320 for MTT restricted blocks 300 and blocks 328 resulting from two MTT splits 320, 322 for MTT restricted blocks 300. The third configuration may be as follows:
Config 3:

| | |
|---|---|
| Allowed coding tools for blocks 330: | Tool-A, Tool-C, Tool- |
| Disallowed coding tools for blocks 330: | Tool-B, Tool-D |
| Allowed coding tools for blocks 328: | Tool-A, Tool-C, Tool-E |
| Disallowed coding tools for blocks 328: | Tool-B, Tool-D |

Thus, Fig. 19 presents the same restriction, as described above with reference to Fig. 18, on blocks 318 where MTT was already not restricted. For example, some coding tools may be constrained also on blocks where MTT was already not restricted when a leaf restriction is applied after one MTT split, when a small number of consecutive splits is applied.

In the embodiments of Fig. 18(A), Fig.18 (B) and Fig. 19, only BTHs of blocks 328 and 330 are displayed, however the described coding tool restriction may be applied to any of the currently allowed MTT splits BTH, BTV, TTH or TTV independently or to all of the currently allowed MTT splits BTH, BTV, TTH or TTV together.

The coding tool restriction of Fig. 18(A) and Fig.18(B) is not limited to MTT restricted blocks. In accordance with further embodiments of the present disclosure a partitioning process with a coding tool restriction may also be provided for MTT unrestricted blocks.

In accord

In accordance with embodiments, coding tools may be restricted based one or more criteria, e.g., based on the number of splits. In accordance with other embodiments, the restriction may be based on the block size, e.g., there may be a block size restriction which disallows some of the coding tools based on the block size. For example, in intra there are template-based intra mode derivation, TIMD, tools which have some limitations based on the block size. The TIMD tools may be disabled when the multiplication of width by height of the block is higher than 1024.

### Signaling aspects

Embodiments concerning some signaling aspects are now described, which are associated with the first and/or second aspects described above.

Embodiments of the first aspect of the present disclosure allows MTT splits to be processed on MTT restricted blocks. This may require the signaling for such blocks to be modified. For example, on MTT restricted blocks only a split_cu_flag is currently sent and a split_qt_flag is determined implicitly. When allowing MTT splits to be processed on MTT restricted blocks, in accordance with embodiments, for specific MTT restricted blocks the signaling of the partitioning may be as is illustrated in Fig. 5, except that the split_qt_flag is not determined implicitly anymore but is signaled explicitly. Also the other flags related to the partitioning are signaled explicitly.

Embodiments of the second aspect of the invention restrict the MTT splits on all type of blocks that are possible CUs which may be either MTT restricted blocks, or blocks resulting from these newly added splits, or any other blocks that could be a CU (MTT unrestricted blocks). In accordance with embodiments, the one or more restrictions may be signaled implicitly or explicitly.

In accordance with embodiments, the first restriction, which prevents the partitioning process after BT or TT has been selected, may be signaled implicitly or explicitly.
- Implicit signaling:
   When BT or TT is selected two or three sub-CUs, respectively, are created. Those sub-CUs are determined to be leaves of the tree, i.e., no more splits are available. The following partitioning signaling can be done implicitly by setting the split_cu_flag to 0.

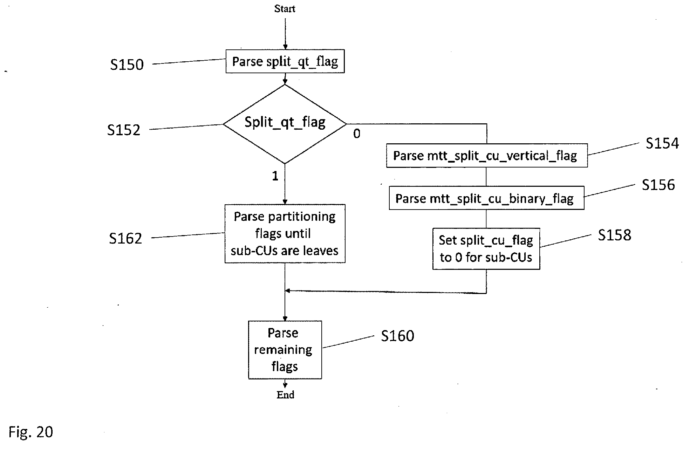

   Fig. 20 illustrates a flow diagram representing a parsing process for partitioning in accordance with embodiments. The process starts with the parsing S150 of the split_qt_flag, e.g., from a bitstream. At S152 it is determined whether the split_qt_flag is 0 or 1. When the split_qt_flag is 0, the mtt_split_cu_vertical_flag is parsed S154 and the mtt_split_cu_binary_flag is parsed S156. Then the split_cu_flag is set S158 to 0 implicitly for the one or more sub-CUs created by the split selected. The process than proceeds with the parsing S160 of the remaining flags. When the split_qt_flag is 1, the process parses S160 all flags until all sub-CUs are leaves, and then proceeds to S160.
- Explicit signaling:
   The signaling of the sub-CUs created by a BT or a TT split may also be done explicitly. For example, the split_cu_flag value may be signaled explicitly in the bitstream.

In accordance with embodiments, the second restriction, which prevents the partitioning process after a restricted number of consecutive MTT splits, may be signaled implicitly or explicitly. The signaling may be performed similar to the signaling of the first restriction but only for the last split possible. For example, if the second MTT split is defined as the last of the consecutive splits possible, then the one or more sub-CUs may be signaled either implicitly in the way as presented above (see also Fig. 20) or explicitly.

In accordance with embodiments, the second restriction, which modifies the coding tools available on blocks resulting from MTT, may signal the coding tools either implicitly or explicitly.
- Implicit signaling:
   The coding tools that are not processed may be deduced implicitly as 0. This may be implemented hard coded. For example, if there is a 128x128 block which performs a binary split, TIMD or any other tools may be disallowed both at the encoder side and at the decoder side. The other coding tools that are processed may be signaled as usual.
- Explicit signaling:
   All coding tools, both the ones that are processed and the ones that not processed, for blocks resulting from an MTT split, may be signaled explicitly.

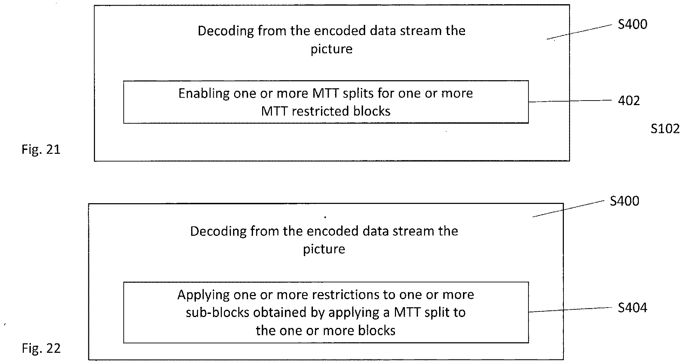

Fig. 21 illustrates a flow diagram of a method for decoding an encoded data stream, the encoded data stream including data representing a picture, in accordance with a first embodiment. The method includes the following:
S400: Decoding from the encoded data stream the picture.
Decoding the picture comprises processing one or more blocks of the picture. The one or more blocks include one or more Multi-Type Tree, MTT, restricted blocks, and the processing includes enabling S402 one or more MTT splits for one or more of the MTT restricted blocks. Optionally, the method comprises parsing from a data stream or bitstream one or more partitioning flags, like the ones described above with reference to Fig. 5.

Fig. 22 illustrates a flow diagram of a method for decoding an encoded data stream, the encoded data stream including data representing a picture, in accordance with a second embodiment. The method includes the following:
S400: Decoding from the encoded data stream the picture.
Decoding the picture comprises processing one or more blocks of the picture. The one or more sub-blocks are obtained by applying a MTT split to the one or more blocks, and the processing includes applying S404 one or more restrictions to one or more of the sub-blocks obtained by applying a MTT split to the one or more blocks. Optionally, the method comprises parsing from a data stream or bitstream one or more indications, e.g., on the restrictions to be applied in accordance with the present disclosure.

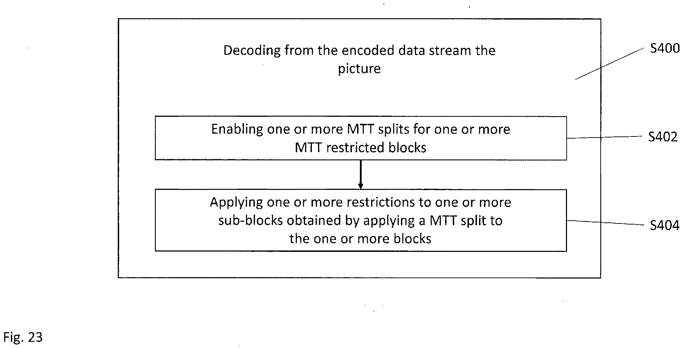

Fig. 23 illustrates a flow diagram of a method for decoding an encoded data stream, the encoded data stream including data representing a picture, in accordance with a third embodiment. The method includes the following:
S400: Decoding from the encoded data stream the picture.
Decoding the picture comprises processing one or more blocks of the picture. The processing includes enabling S402 one or more MTT splits for one or more of the MTT restricted blocks, and applying S404one or more restrictions to one or more of the sub-blocks obtained by applying a MTT split to the one or more blocks. Optionally, the method comprises parsing from a data stream or bitstream one or more partitioning flags, like the ones described above with reference to Fig. 5, and/or one or more indications, e.g., on the restrictions to be applied in accordance with the present disclosure.

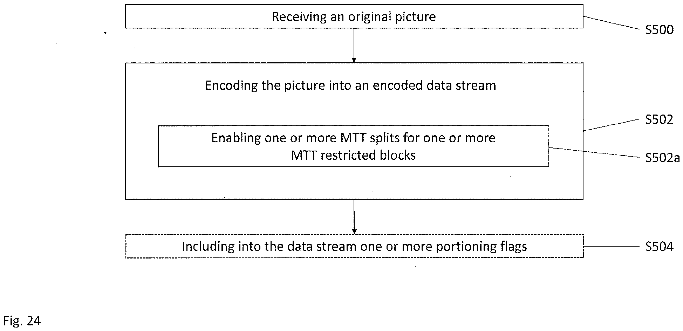

Fig. 24 illustrates a flow diagram of a method for encoding a picture into an encoded data stream, in accordance with a first embodiment. The encoded data stream includes data representing the picture and the method includes the following:
S500: Receiving an original picture.
S502: Encoding the picture into the encoded data stream.
Encoding the picture comprises processing one or more blocks of the picture. The one or more blocks include one or more Multi-Type Tree, MTT, restricted blocks, and the processing includes enabling S502a one or more MTT splits for one or more of the MTT restricted blocks. Optionally, the method comprises including S504 into the data stream or bitstream one or more partitioning flags, like the ones described above wit reference to Fig. 5.

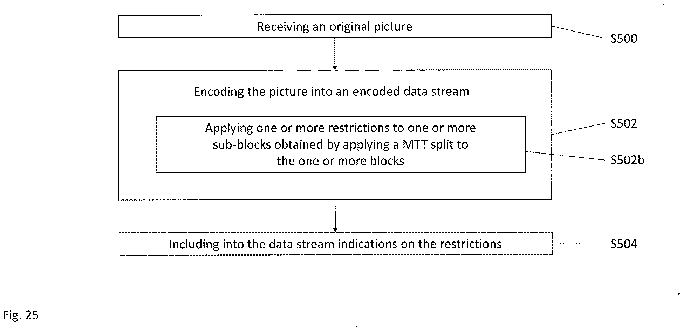

Fig. 25 illustrates a flow diagram of a method for encoding a picture into an encoded data stream, in accordance with a second embodiment. The encoded data stream includes data representing the picture and the method includes the following:
S500: Receiving an original picture.
S502: Encoding the picture into the encoded data stream.
Encoding the picture comprises processing one or more blocks of the picture. The one or more sub-blocks are obtained by applying a MTT split to the one or more blocks, and the processing includes applying S502b one or more restrictions to one or more of the sub-blocks obtained by applying a MTT split to the one or more blocks. Optionally, the method comprises including S504 into a data stream or bitstream one or more indications, e.g., on the restrictions to be applied in accordance with the present disclosure.

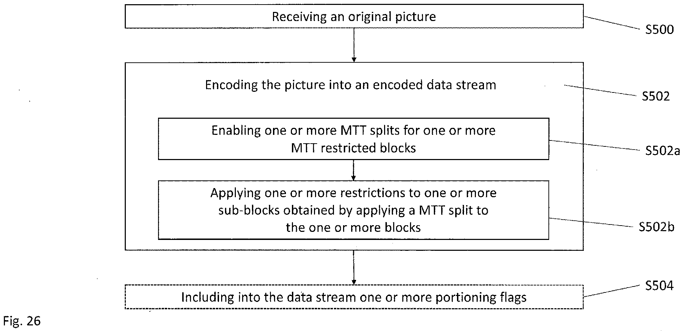

Fig. 26 illustrates a flow diagram of a method for encoding a picture into an encoded data stream, in accordance with a third embodiment. The encoded data stream includes data representing the picture and the method includes the following:
S500: Receiving an original picture.
S502: Encoding the picture into the encoded data stream.
Encoding the picture comprises processing one or more blocks of the picture. The processing includes enabling S502a one or more MTT splits for one or more of the MTT restricted blocks, and applying S502b one or more restrictions to one or more of the sub-blocks obtained by applying a MTT split to the one or more blocks. Optionally, the method comprises including S504 into a data stream or bitstream one or more partitioning flags, like the ones described above with reference to Fig. 5, and/or one or more indications, e.g., on the restrictions to be applied in accordance with the present disclosure.

### Further embodiments

So far, the inventive concept has been described with reference to aspects and embodiments concerning methods of obtaining one or more IPMs, e.g., for decoding and for encoding. In accordance with further embodiments, the present disclosure also provides an apparatus of obtaining one or more IPMs as well as encoders/decoders including such an apparatus.

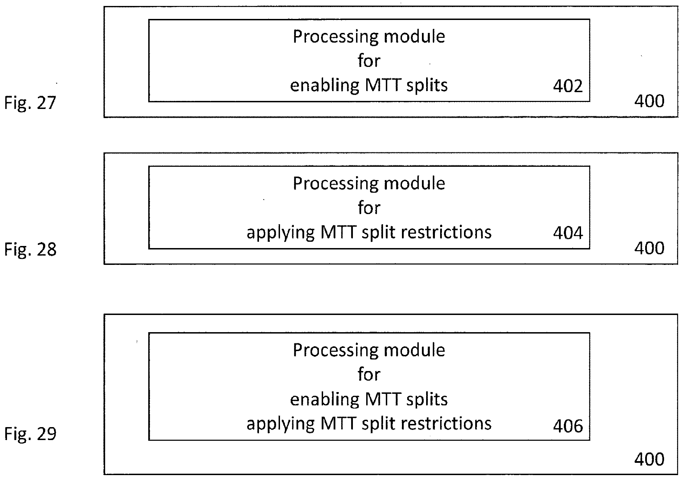

Fig. 27 illustrates a block diagram of an apparatus of processing one or more blocks of a picture in accordance with a first embodiment of the present disclosure. The apparatus 400 includes the following modules:
402: A processing module for enabling Multi-Type Tree, MTT, splits.
In accordance with embodiments, the one or more blocks comprise one or more MTT restricted blocks, and the processing module 402 is configured to enable one or more MTT splits for one or more of the MTT restricted blocks. The processing module 402 may also be referred to as a Multi-Type Tree, MTT, split enabler module.

Fig. 28 illustrates a block diagram of an apparatus of processing one or more blocks of a picture in accordance with a second embodiment of the present disclosure. The apparatus 400 includes the following modules:
404: A processing module for applying MTT split restrictions.
In accordance with embodiments, the one or more sub-blocks are obtained by applying a MTT split to the one or more blocks, and the processing module 402 is configured to apply one or more restrictions to one or more of the sub-blocks. The processing module 402 may also be referred to as a restriction module.

Fig. 29 illustrates a block diagram of an apparatus of processing one or more blocks of a picture in accordance with a third embodiment of the present disclosure. The apparatus 400 includes the following modules:
406: A processing module for enabling Multi-Type Tree, MTT, splits and for applying MTT split restrictions.
In accordance with embodiments, the one or more blocks comprise one or more MTT restricted blocks, and the processing module 406 is configured to enable one or more MTT splits for one or more of the MTT restricted blocks, and the one or more sub-blocks are obtained by applying a MTT split to the one or more blocks, and the processing module 406 is configured to apply one or more restrictions to one or more of the sub-blocks.

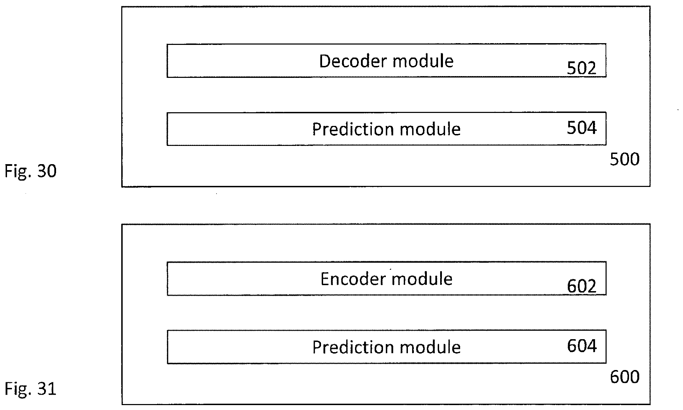

Fig. 30 illustrates a block diagram of a decoder for decoding an encoded data stream in accordance with embodiments of the present disclosure. The encoded data stream includes data representing a picture. The decoder 500 includes the following modules: 502: A decoder module configured to decode from the encoded data stream the picture.

504: A prediction module, e.g., a prediction module 170 as depicted in Fig. 2. The decoder 500 is configured to operate in accordance with embodiments of the present disclosure. For example, the decoder 500 includes an apparatus as described with reference to any one of Fig. 27 to Fig. 29.

Fig. 31 illustrates a block diagram of an encoder for encoding a picture into an encoded data stream in accordance with embodiments of the present disclosure. The encoded data stream includes data representing the picture. The encoder 600 includes the following modules:
602: An encoder module configured to receive the original picture and to encode the picture into the encoded data stream.
604: A prediction module, e.g., a prediction module 124 as depicted in Fig. 1. The prediction module 604 is configured to operate in accordance with embodiments of the present disclosure. For example, the encoder 600 includes an apparatus as described with reference to any one of Fig. 27 to Fig. 29.

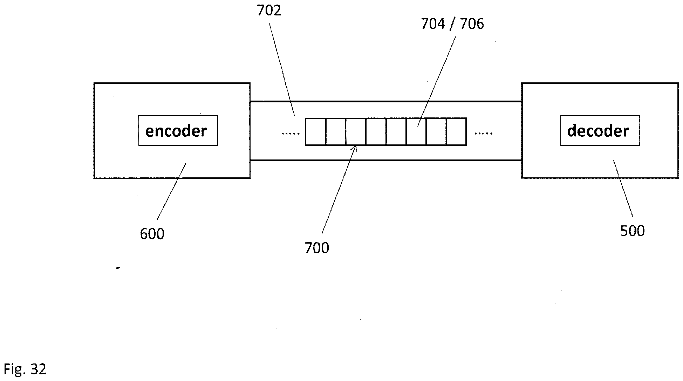

Fig. 32 illustrates a data stream 700 in accordance with embodiments of the present disclosure, which has encoded thereinto a picture and information data associated with the picture. In general, the data stream may have encoded thereinto information representing a picture and/or information being associated with encoding/decoding the picture. For example, the data stream or bitstream 700 may be provided by an encoder 600 that performs the inventive method for encoding the picture into the data stream 700. The data stream 700 is transmitted to a decoder 500 via a wired or wireless transmission medium 702, like cable or a radio link, and the decoder 500 decodes from the data stream 700 the picture. The data stream includes one or more partitioning flags 704, like the ones described above with reference to Fig. 5, and/or one or more indications 706, e.g., on the restrictions to be applied in accordance with the present disclosure.

Although some aspects of the disclosed concept have been described in the context of an apparatus, it is clear that these aspects also represent a description of the corresponding method, where a block or a device corresponds to a method step or a feature of a method step. Analogously, aspects described in the context of a method step also represent a description of a corresponding block or item or feature of a corresponding apparatus.

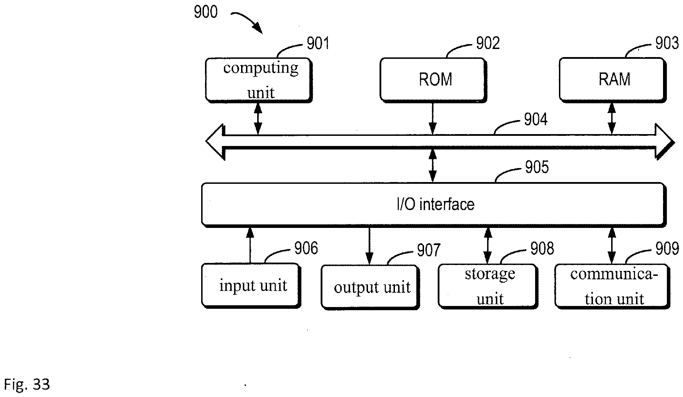

Fig. 33 is a block diagram illustrating an electronic device 900 according to embodiments of the present disclosure. The electronic device is intended to represent various forms of digital computers, such as a laptop, a desktop, a workstation, a personal digital assistant, a server, a blade server, a mainframe computer, and other suitable computers. The electronic device may also represent various forms of mobile devices, such as a personal digital processor, a cellular phone, a smart phone, a wearable device, and other similar computing devices. The components shown herein, their connections and relationships, and their functions are described as examples only, and are not intended to limit implementations of the present disclosure described and/or claimed herein. The device 900 includes a computing unit 901 to perform various appropriate actions and processes according to computer program instructions stored in a read only memory (ROM) 902, or loaded from a storage unit 908 into a random access memory (RAM) 903. In the RAM 903, various programs and data for the operation of the storage device 900 can also be stored. The computing unit 901, the ROM 902, and the RAM 903 are connected to each other through a bus 904. An input/output (I/O) interface 905 is also connected to the bus 904.

Components in the device 900 are connected to the I/O interface 905, including: an input unit 906, such as a keyboard, a mouse; an output unit 907, such as various types of displays, speakers; a storage unit 908, such as a disk, an optical disk; and a communication unit 909, such as network cards, modems, wireless communication transceivers, and the like. The communication unit 909 allows the device 900 to exchange information/data with other devices through a computer network such as the Internet and/or various telecommunication networks. The computing unit 901 may be formed of various general-purpose and/or special-purpose processing components with processing and computing capabilities. Some examples of the computing unit 901 include, but are not limited to, a central processing unit (CPU), graphics processing unit (GPU), various specialized artificial intelligence (AI) computing chips, various computing units that run machine learning model algorithms, digital signal processor (DSP), and any suitable processor, controller, microcontroller, etc. The computing unit 901 performs various methods and processes described above, such as an image processing method. For example, in some embodiments, the image processing method may be implemented as computer software programs that are tangibly embodied on a machine-readable medium, such as the storage unit 908. In some embodiments, part or all of the computer program may be loaded and/or installed on the device 900 via the ROM 902 and/or the communication unit 909. When a computer program is loaded into the RAM 903 and executed by the computing unit 901, one or more steps of the image processing method described above may be performed. In some embodiments, the computing unit 901 may be configured to perform the image processing method in any other suitable manner (e.g., by means of firmware).

Various implementations of the systems and techniques described herein above may be implemented in digital electronic circuitry, integrated circuit systems, field programmable gate arrays (FPGA), application specific integrated circuits (ASIC), application specific standard products (ASSP), system-on-chip (SOC), complex programmable logic device (CPLD), computer hardware, firmware, software, and/or combinations thereof. These various embodiments may include being implemented in one or more computer programs executable and/or interpretable on a programmable system including at least one programmable processor, and the programmable processor may be a special-purpose or general-purpose programmable processor, and may receive data and instructions from a storage system, at least one input device and at least one output device, and may transmit data and instructions to the storage system, the at least one input device, and the at least one output device.

Program code for implementing the methods of the present disclosure may be written in any combination of one or more programming languages. These program codes may be provided to a processor or controller of a general computer, a dedicated computer, or other programmable data processing device, such that the program codes, when executed by the processor or controller, cause the functions and/or operations specified in the flow diagrams and/or block diagrams is performed. The program code can be executed entirely on the machine, partly on the machine, as a stand-alone software package partly on a machine and partly on a remote machine or entirely on a remote machine or server.

In the context of the present disclosure, a machine-readable medium may be a tangible medium that may contain or store a program for use by or in connection with an instruction execution system, apparatus, or device. The machine-readable medium may be a machine-readable signal medium or a machine-readable storage medium. A machine-readable medium may include, but is not limited to, an electronic, magnetic, optical, electromagnetic, infrared, or semiconductor system, apparatus, or device, or any suitable combination of the foregoing. More specific examples of machine-readable storage media include electrical connections based on one or more wires, portable computer disks, hard disks, random access memories (RAM), read-only memories (ROM), erasable programmable read-only memories (EPROM or flash memory), fiber optics, compact disc read-only memories (CD-ROM), optical storage devices, magnetic storage devices, or any suitable combination of the foregoing.

To provide interaction with a user, the systems and techniques described herein may be implemented on a computer having a display device (e.g., a cathode ray tube (CRT) or liquid crystal display (LCD)) for displaying information for the user; and a keyboard and pointing device (e.g., a mouse or trackball) through which a user can provide an input to the computer. Other types of devices can also be used to provide interaction with the user, for example, the feedback provided to the user may be any form of sensory feedback (e.g., visual feedback, auditory feedback, or tactile feedback); and may be in any form (including acoustic input, voice input, or tactile input) to receive the input from the user.

The systems and techniques described herein may be implemented on a computing system that includes back-end components (e.g., as a data server), or a computing system that includes middleware components (e.g., an application server), or a computing system that includes front-end components (e.g., a user computer with a graphical user interface or web browser through which a user can interact with implementations of the systems and techniques described herein), or a computer system including such a backend components, middleware components, front-end components or any combination thereof. The components of the system may be interconnected by any form or medium of digital data communication (e.g., a communication network). Examples of the communication network includes: Local Area Networks (LAN), Wide Area Networks (WAN), the Internet and blockchain networks.

The computer system may include a client and a server. The Client and server are generally remote from each other and usually interact through a communication network. The relationship of the client and the server is generated by computer programs running on the respective computers and having a client-server relationship with each other. The server may be a cloud server, also known as a cloud computing server or a cloud host, which is a host product in the cloud computing service system, and solves the defects of difficult management and weak business expansion in traditional physical hosts and virtual private servers ("VPS" for short). The server may also be a server of a distributed system, or a server combined with a blockchain.

It is to be understood that the steps may be reordered, added or deleted by using the various forms of flows shown above. For example, the steps described in the present disclosure may be executed in parallel, sequentially, or in different orders, as long as the desired results of the technical solutions in the present disclosure can be achieved, and no limitation is imposed herein.

Further embodiments are now described:
A 1^{st} embodiment provides a method of processing one or more blocks of a picture, the method comprising:
   enabling one or more Multi-Type Tree, MTT, splits for one or more blocks, which are of the MTT restricted blocks, and/or
   applying one or more restrictions to one or more sub-blocks, wherein the one or more sub-blocks are obtained by applying a MTT split to the one or more blocks.
A 2^{nd} embodiment provides the method of the 1^{st} embodiment, wherein the one or more blocks of the picture are processed according to a certain codec, wherein the certain codec provides a plurality of MTT splits, and wherein all of the plurality of MTT splits or a proper subset of the plurality of MTT splits are enabled for the one or more MTT restricted blocks.
A 3^{rd} embodiment provides the method of the 1^{st} or 2^{nd} embodiment, wherein enabling the one or more MTT splits is signaled in a data stream, like a bitstream, including data representing the picture, e.g., at a Sequence Parameter Set, SPS, level or at a Picture Parameter Set, PPS, level.
A 4^{th} embodiment provides the method of the 3^{rd} embodiment, wherein
   a first flag, e.g., a split_qt_flag, is explicitly signaled, and wherein the first flag indicates that the MTT partitioning mode is to be applied for one or more of the MTT restricted blocks, and
   a second flag, e.g., mtt_split_cu_vertical_flag, is signaled to indicate a splitting direction, and a third flag, e.g., mtt_split_cu_binary_flag, is signaled to indicate whether the split is a binary split or a ternary split.
A 5^{th} embodiment provides the method of any one of the preceding embodiments, wherein the one or more restrictions applied to one or more of the sub-blocks comprise one or more of the following:
   - a leaf restriction on the sub-block,
   - a restriction on a number of consecutive MTT splits applicable to the sub-block,
   - a coding tool restriction on the sub-block.
A 6^{th} embodiment provides the method of the 5^{th} embodiment, wherein the one or more blocks comprise one or more MTT unrestricted blocks or one or more MTT restricted blocks, wherein the MTT split is applied to the one or more MTT unrestricted blocks or the one or more MTT restricted blocks for obtaining the one or more sub-blocks.
A 7^{th} embodiment provides the method of the 5^{th} or 6^{th} embodiment, wherein the one or more blocks of the picture are processed according to a certain codec, and wherein the one or more restrictions are predefined, e.g. in a specification of the certain codec.
An 8^{th} embodiment provides the method of any one of the 5^{th} to 7^{th} embodiments, wherein the one or more restrictions are signaled in a data stream, like a bitstream, including data representing the picture, e.g., at a Sequence Parameter Set, SPS, level or at a Picture Parameter Set, PPS, level.
A 9^{th} embodiment provides the method of any one of the 5^{th} to 8^{th} embodiments, wherein the sub-block becomes a leaf node for which no further split is allowed.
A 10^{th} embodiment provides the method of any one of the 5^{th} to 8^{th} embodiments, wherein no split is applied to the sub-block.
An 11^{th} embodiment provides the method of any one of the 5^{th} to 10^{th} embodiments, wherein the leaf restriction is signaled implicitly or explicitly.
A 12^{th} embodiment provides the method of the 11^{th} embodiment, wherein a partitioning signaling following a creation of the sub-block is done implicitly by setting a flag, e.g., a split_cu_flag, to a predefined value, like 0, wherein the flag indicates whether or not the sub-block is further partitioned, and wherein the predefined value indicates that the sub-block is not to be further partitioned.
A 13^{th} embodiment provides the method of any one of the 5^{th} to 12^{th} embodiments, wherein the sub-block block is determined to be a leaf node responsive to a flag, e.g., a split_qt_flag, having a predefined value, like 0, wherein the flag indicates for the block, from which the sub-block is created, whether or not MTT partitioning is to be applied to the block, and wherein the predefined value indicates that no MTT partitioning is to be applied to the block.
A 14^{th} embodiment provides the method of any one of the 5^{th} to 13^{th} embodiments, wherein the number of consecutive MTT splits applicable to the sub-block is restricted to a predefined or signaled number of consecutive MTT splits, e.g., to one consecutive MTT split, and wherein one or more consecutive sub-blocks are obtained by applying the consecutive MTT splits.
A 15^{th} embodiment provides the of 14^{th} embodiment, wherein a last one of the consecutive sub-blocks becomes a leaf node for which no further split is allowed, and wherein the last one of the consecutive sub-blocks is obtained from a last one of the consecutive MTT splits.
A 16^{th} embodiment provides the method of the 15^{th} embodiment, wherein no split is applied to a last one of the consecutive sub-blocks, and wherein the last one of the consecutive sub-blocks is obtained from a last one of the consecutive MTT splits.
A 17^{th} embodiment provides the method of the 15^{th} or 16^{th} embodiment, wherein the leaf restriction of the last consecutive sub-block is signaled implicitly or explicitly.
An 18^{th} embodiment provides the method of the 17^{th} embodiment, wherein a partitioning signaling following a creation of the last consecutive sub-block is done implicitly by setting a flag, e.g., a split_cu_flag, to a predefined value, like 0, wherein the flag indicates whether or not the last consecutive sub-block is further partitioned, and wherein the predefined value indicates that the last consecutive sub-block is not to be further partitioned.
A 19^{th} embodiment provides the method of any one of the 15^{th} to 18^{th} embodiments, wherein the last consecutive sub-block block is determined to be a leaf node responsive to a flag, e.g., a split_qt_flag, having a predefined value, like 0, wherein the flag indicates for a preceding block, from which the last consecutive sub-block is created, whether or not MTT partitioning is to be applied to the preceding block, and wherein the predefined value indicates that no MTT partitioning is to be applied to the preceding block.
A 20^{th} embodiment provides the method of any one of the 5^{th} to 19^{th} embodiments, wherein the one or more blocks of the picture are processed according to a certain codec, wherein the certain codec provides one or more coding tools, and wherein predefined or signaled ones of the one or more coding tools are allowed or disallowed for use with the one or more sub-blocks
A 21^{st} embodiment provides the method of the 20^{th} embodiment, wherein
   a predefined or signaled number of consecutive MTT splits is applied to the sub-block, e.g., one consecutive MTT split, and wherein one or more consecutive sub-blocks are obtained by applying the consecutive MTT splits, and
   predefined or signaled ones of the one or more coding tools are allowed or disallowed for use with the sub-block and with the one or more consecutive sub-blocks.
A 22^{nd} embodiment provides the method of the 20^{th} or 21^{st} embodiment, wherein the allowed or disallowed coding tools for use with the sub-block and with the one or more consecutive sub-blocks change dependent on a configuration or dependent on the number of consecutive MTT splits.
A 23^{rd} embodiment provides the method of 22^{nd} embodiment, wherein the configuration comprises a first configuration, wherein, according to the first configuration, all coding tools are allowed for use with the sub-block, and a proper subset of the coding tools is allowed for use with the one or more consecutive sub-blocks.
A 24^{th} embodiment provides the method of the 22^{nd} or 23^{rd} embodiment, wherein the configuration comprises a second configuration, wherein, according to the second configuration, a proper subset of the coding tools is allowed for use with the sub-block, and all coding tools are allowed for use with the one or more consecutive sub-blocks.
A 25^{th} embodiment provides the method of any one of the 22^{nd} to 24^{th} embodiments, wherein the configuration comprises a third configuration, wherein, according to the third configuration, a first proper subset of the coding tools is allowed for use with the sub-block, and a second proper subset of the coding tools is allowed for use with the one or more consecutive sub-blocks.
A 26^{th} embodiment provides the method of the 25^{th} embodiment, wherein in the first proper subset and in the second proper subset some or all of the coding tools are the same.
A 27^{th} embodiment provides the method of the 25^{th} embodiment, wherein the first proper subset and the second proper subset include different coding tools.
A 28^{th} embodiment provides the method of any one of the 20^{th} to 27^{th} embodiments, wherein the one or more coding tools are allowed for use with the sub-block dependent on a block size of the block currently processed
A 29^{th} embodiment provides the method of any one of the 20^{th} to 28^{th} embodiments, wherein the codec comprises an Enhanced Compression Model, ECM, codec, and wherein the one or more coding tools provided by the ECM codec comprise one or more of the following:
   - decoder side intra mode derivation, DIMD,
   - template-based intra mode derivation, TIMD,
   - extrapolation filter-based intra prediction, EIP,
   - intra template matching prediction, IntraTMP,
   - combined inter and intra prediction, CIIP,
   - Intra block copy, IBC.
A 30^{th} embodiment provides the method of any one of the 20^{th} to 29^{th} embodiments, wherein the one or more coding tools allowed or disallowed for use with the one or more sub-blocks are predefined in a specification of the certain codec.
A 31^{st} embodiment provides the method of any one of the 20^{th} to 30^{th} embodiments, wherein the one or more coding tools allowed or disallowed for use with the one or more sub-blocks are signaled in a data stream, like a bitstream, including data representing the picture, e.g., at a Sequence Parameter Set, SPS, level or at a Picture Parameter Set, PPS, level.
A 32^{nd} embodiment provides the method of any one of the 5^{th} to 27^{th} embodiments, wherein the coding tool restriction is signaled implicitly or explicitly.
A 33^{rd} embodiment provides the method of the 32^{nd} embodiment, wherein a disallowed coding tool signaled implicitly.
A 34^{th} embodiment provides the method of the 32^{nd} embodiment, wherein all allowed and disallowed coding tools are signaled explicitly.
A 35th embodiment provides the method of any one of the preceding embodiments, wherein the one or more MTT splits comprise one or more of the following:
   - a vertical binary split, SPLIT_BT_VER,
   - a horizontal binary split, SPLIT_BT_HOR,
   - a vertical ternary split, SPLIT_TT_VER,
   - a horizontal ternary split, SPLIT_TT_HOR.
A 36^{th} embodiment provides the method of any one of the preceding embodiments, wherein a MTT restricted block is a block which, conventionally or in accordance with existing codecs or specifications, does not allow for one or more MTT splits.
A 37^{th} method of any one of the preceding embodiments, wherein the MTT restricted block has a size being larger than or equal to a predefined or signaled threshold.
A 38 embodiment provides the method of any one of the preceding embodiments, wherein the one or more blocks of the picture are processed according to a certain codec, wherein a MTT split is limited to a block larger or smaller than a certain threshold, and wherein an upper bound or a lower bound of the certain threshold may be defined in a specification of the certain codec or may be signaled in a data stream, like a bitstream, including data representing the picture, e.g., at a Sequence Parameter Set, SPS, level or at a Picture Parameter Set, PPS, level.
A 39^{th} embodiment provides a method for decoding an encoded data stream, the encoded data stream including data representing a picture, the method comprising:
   decoding from the encoded data stream the picture,
   wherein decoding the picture comprises processing one or more blocks according to the method of any one of the preceding embodiments.
A 40^{th} embodiment provides the method of the 39^{th} embodiment, wherein decoding the picture comprises obtaining from a data stream, like a bitstream, including data representing the picture, e.g., at a Sequence Parameter Set, SPS, level or at a Picture Parameter Set, PPS, level, for one or more of the blocks one of more of the following:
   - a signaling indicating for a MTT restricted block whether or not a MTT split is enabled,
   - a signaling indicating for a block the one or more restrictions.
A 41^{st} embodiment provides a method for encoding a picture into an encoded data stream, the encoded data stream including data representing the picture, the method comprising:
   receiving an original picture, and
   encoding the picture into the encoded data stream,
   wherein encoding the picture comprises processing one or more blocks according to the method of any one of the preceding embodiments.
A 42 embodiment provides the method of the 41^{st} embodiment, wherein encoding the picture comprises encoding into a data stream, like a bitstream, including data representing the picture, e.g., at a Sequence Parameter Set, SPS, level or at a Picture Parameter Set, PPS, level, for one or more of the blocks one of more of the following:
   - a signaling indicating for a MTT restricted block whether or not a MTT split is enabled,
   - a signaling indicating for a block the one or more restrictions.
A 43^{rd} embodiment provides a non-transitory computer-readable storage medium comprising instructions which, when executed by a computer, cause the computer to carry out the method of any one of the preceding embodiments.
A 44^{th} embodiment provides an apparatus of processing one or more blocks of a picture, the apparatus comprising:
   a Multi-Type Tree, MTT, split enabler module, wherein the one or more blocks comprise one or more MTT restricted blocks, and wherein the MTT split enabler module is configured to enable one or more MTT splits for one or more of the MTT restricted blocks, and/or
   a restriction module, wherein one or more sub-blocks are obtained by applying a MTT split to the one or more blocks, and wherein the restriction module is configured to apply one or more restrictions to one or more of the sub-blocks.
A 45^{th} embodiment provides an apparatus for decoding an encoded data stream, the encoded data stream including data representing a picture, the apparatus comprising:
   a decoder module configured to decode from the encoded data stream the picture, and
   a prediction module, the prediction module including an apparatus according to the 44^{th} embodiment.
A 46^{th} embodiment provides an apparatus for encoding a picture into an encoded data stream, the encoded data stream including data representing the picture, the apparatus comprising:
   an encoder module configured to receive the original picture and to encode the picture into the encoded data stream, and
   a prediction module, the prediction module including an apparatus according to the 44^{th} embodiment.
A 47^{th} embodiment provides a data stream having encoded thereinto a picture, wherein the data stream comprises one of more of the following:
   one or more flags indicating whether or not a MTT split is enabled for a MTT restricted block of one or more blocks of the picture, and/or
   one or more flags indicating one or more restrictions for one or more sub-blocks, wherein the one or more sub-blocks are obtained by applying a MTT split to one or more blocks of the picture.

The above-mentioned specific embodiments do not limit the scope of protection of the present disclosure. It is to be understood by those skilled in the art that various modifications, combinations, sub-combinations and replacements may be made depending on design requirements and other factors. Any modifications, equivalent replacements, and improvements made within the principles of the present disclosure or invention is to be included within the protection scope of the present disclosure or invention.

### References

[1] H.264: Advanced video coding for generic audio-visual services, https://www.itu.int/rec/T-REC-H.264-202108-P/en
[2] H.265: High efficiency video coding, https://www.itu.int/rec/T-REC-H.265-202108-P/en
[3] H.266: Versatile video coding, https://www.itu.int/rec/T-REC-H.266-2018-I/en
[4] AV1 Bitstream & Decoding Process Specification, http://aomedia.org/av1/specification/
[5] Algorithm description of Enhanced Compression Model 12 (ECM 12), document JVET-AG2025, https://jvet-experts.org/doc_end_user/documents/33_Teleconference/wg11/JVET-AG2025-v1.zip

## Claims

1. A method of processing one or more blocks of a picture, the method comprising:
enabling one or more Multi-Type Tree, MTT, MTT, splits for one or more of the blocks, which are MTT restricted blocks, and/or
applying one or more restrictions to one or more sub-blocks, wherein the one or more sub-blocks are obtained by applying a MTT split to the one or more blocks.

2. The method of claim 1, wherein the one or more blocks of the picture are processed according to a certain codec, wherein the certain codec provides a plurality of MTT splits, and wherein all of the plurality of MTT splits or a proper subset of the plurality of MTT splits are enabled for the one or more MTT restricted blocks.

3. The method of claim 1 or 2,
wherein enabling the one or more MTT splits is signaled in a data stream, like a bitstream, including data representing the picture, and
wherein, optionally, a first flag is explicitly signaled, and wherein the first flag indicates that the MTT partitioning mode is to be applied for one or more of the MTT restricted blocks, and a second flag is signaled to indicate a splitting direction, and a third flag is signaled to indicate whether the split is a binary split or a ternary split.

4. The method of any one of the preceding claims,
wherein the one or more restrictions applied to one or more of the sub-blocks comprise one or more of the following:
- a leaf restriction on the sub-block,
- a restriction on a number of consecutive MTT splits applicable to the sub-block,
- a coding tool restriction on the sub-block, and
wherein, optionally, the one or more blocks comprise one or more MTT unrestricted blocks and/or one or more MTT restricted blocks, wherein the MTT split is applied to the one or more MTT unrestricted blocks and/or the one or more MTT restricted blocks for obtaining the one or more sub-blocks.

5. The method of claim 4, wherein the sub-block becomes a leaf node for which no further split is allowed, or wherein no split is applied to the sub-block.

6. The method of claim 4 or 5,
wherein the leaf restriction is signaled implicitly or explicitly, and
wherein, optionally, a partitioning signaling following a creation of the sub-block is done implicitly by setting a flag to a predefined value, like 0, wherein the flag indicates whether or not the sub-block is further partitioned, and wherein the predefined value indicates that the sub-block is not to be further partitioned.

7. The method of any one of claims 4 to 6,
wherein the number of consecutive MTT splits applicable to the sub-block is restricted to a predefined or signaled number of consecutive MTT splits, and wherein one or more consecutive sub-blocks are obtained by applying the consecutive MTT splits, and
wherein, optionally, a last one of the consecutive sub-blocks becomes a leaf node for which no further split is allowed, and wherein the last one of the consecutive sub-blocks is obtained from a last one of the consecutive MTT splits, or no split is applied to a last one of the consecutive sub-blocks, and wherein the last one of the consecutive sub-blocks is obtained from a last one of the consecutive MTT splits.

8. The method of any one of claims 4 to 7,
wherein the leaf restriction of the last consecutive sub-block is signaled implicitly or explicitly, and
wherein, optionally, a partitioning signaling following a creation of the last consecutive sub-block is done implicitly by setting a flag to a predefined value, like 0, wherein the flag indicates whether or not the last consecutive sub-block is further partitioned, and wherein the predefined value indicates that the last consecutive sub-block is not to be further partitioned.

9. The method of any one of claims 4 to 8, wherein the one or more blocks of the picture are processed according to a certain codec wherein the certain codec provides one or more coding tools, and wherein predefined or signaled ones of the one or more coding tools are allowed or disallowed for use with the one or more sub-blocks.

10. The method of claim 9, wherein
a predefined or signaled number of consecutive MTT splits is applied to the sub-block, and wherein one or more consecutive sub-blocks are obtained by applying the consecutive MTT splits, and
predefined or signaled ones of the one or more coding tools are allowed or disallowed for use with the sub-block and with the one or more consecutive sub-blocks.

11. The method of any one of claims 4 to 10,
wherein the coding tool restriction is signaled implicitly or explicitly, and
wherein, optionally, a disallowed coding tool signaled implicitly or all allowed and disallowed coding tools are signaled explicitly.

12. The method of any one of the preceding claims, wherein the MTT restricted block has a size being larger than or equal to a predefined or signaled threshold.

13. A non-transitory computer-readable storage medium comprising instructions which, when executed by a computer, cause the computer to carry out the method of any one of the preceding claims.

14. An apparatus of processing one or more blocks of a picture, the apparatus comprising:
a processing module,
wherein the one or more blocks comprise one or more a Multi-Type Tree, MTT, restricted blocks, and wherein the processing module is configured to enable one or more MTT splits for one or more of the MTT restricted blocks, and/or
wherein one or more sub-blocks are obtained by applying a MTT split to the one or more blocks, and wherein the processing module is configured to apply one or more restrictions to one or more of the sub-blocks.

15. A data stream having encoded thereinto a picture, wherein the data stream comprises one of more of the following:
one or more flags indicating whether or not a MTT split is enabled for a MTT restricted block of one or more blocks of the picture, and/or
one or more flags indicating one or more restrictions for one or more sub-blocks, wherein the one or more sub-blocks are obtained by applying a MTT split to one or more blocks of the picture.
